(19) **Europäisches Patentamt European Patent Office Office européen des brevets**

(11) **EP 4 465 545 A1**

(12) **EUROPEAN PATENT APPLICATION**
published in accordance with Art. 153(4) EPC

(43) Date of publication:
**20.11.2024 Bulletin 2024/47**

(21) Application number: **23767030.2**

(22) Date of filing: **13.02.2023**

(51) International Patent Classification (IPC):
$H04B\ 7/0404^{(2017.01)}$    $H04B\ 7/0408^{(2017.01)}$
$H04B\ 7/024^{(2017.01)}$    $H04B\ 7/06^{(2006.01)}$
$H04W\ 72/04^{(2023.01)}$    $H04W\ 72/23^{(2023.01)}$
$H04W\ 52/14^{(2009.01)}$    $H04W\ 52/42^{(2009.01)}$

(52) Cooperative Patent Classification (CPC):
H04B 7/024; H04B 7/0404; H04B 7/0408;
H04B 7/06; H04W 52/14; H04W 52/42;
H04W 72/04; H04W 72/23

(86) International application number:
**PCT/KR2023/002051**

(87) International publication number:
**WO 2023/171925 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2022 KR 20220030098**

(71) Applicant: **Samsung Electronics Co., Ltd
Suwon-si, Gyeonggi-do 16677 (KR)**

(72) Inventors:
• **PARK, Kyoungmin
Suwon-si, Gyeonggi-do 16677 (KR)**
• **ABEBE, Ameha Tsegaye
Suwon-si, Gyeonggi-do 16677 (KR)**
• **LIM, Seongmok
Suwon-si, Gyeonggi-do 16677 (KR)**
• **JANG, Youngrok
Suwon-si, Gyeonggi-do 16677 (KR)**
• **JI, Hyoungju
Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD FOR COOPERATIVE COMMUNICATION BETWEEN TRANSMISSION AND RECEPTION NODES FOR CONTROLLING MULTI-PANEL SIMULTANEOUS TRANSMISSION TERMINAL**

(57) The present disclosure relates to a 5G or 6G communication system for supporting higher data transmission rates. Disclosed are a method and device for reporting signals and information wherein when a terminal arbitrarily determines the number of panels to be used in uplink communication and performs or intends to perform uplink transmission by using multiple panels simultaneously, relevant information is reported to a base station to enable the base station to control or schedule uplink communication in consideration of multi-panel operations of the terminal.

EP 4 465 545 A1

FIG. 1

**Description**

[Technical Field]

The disclosure relates to a method and a device for beam control in a wireless communication system.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (Bandwidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with extended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The 5G system is considering supports for more various services as compared to the conventional 4G system. For example, the most representative service may include a ultrawide band mobile communication service (enhanced mobile broad band (eMBB)), an ultrahigh reliable/low latency communication service (ultra-reliable and low latency communication (URLLC)), a massive device-to-device communication service (massive machine type communication (mMTC)), and a next-generation broadcast service (evolved multimedia broadcast/multicast service (eMBMS)). A system providing the URLLC service may be referred to as a URLLC system, and a system providing the eMBB service may be referred to as an eMBB system. The terms "service" and "system" may be interchangeably used.

Among these services, the URLLC service is a service that is newly considered in the 5G system, in contrast to the existing 4G system, and requires to meet ultrahigh reliability (e.g., packet error rate of about 10-5) and low latency (e.g., about 0.5msec) conditions as compared to the other services. To meet these strict conditions required therefor, the URLLC service may need to apply a shorter transmission time interval (TTI) than the eMBB service, and various operating schemes employing the same are now under consideration.

To meet the requirements for various services, research has been conducted on multiple transmission and reception point (M-TRP) techniques in which terminals perform communication through multiple transmission/reception nodes.

[Disclosure of Invention]

[Technical Problem]

The disclosure proposes a signal and information reporting technique of, in controlling an operation of a terminal communicating with a base station by using multiple panels, when the terminal randomly determines the number of panels to be used in uplink communication and performs or is to perform uplink transmission through simultaneous use of multiple panels, reporting relevant information to the base station so as to enable the base station to control or schedule uplink communication in consideration of a multi-panel operation of the terminal.

The technical subjects pursued in the disclosure may not be limited to the above-mentioned technical subjects, and other technical subjects which are not mentioned may be clearly understood, through the following descriptions, by those skilled in the art to which the disclosure pertains.

[Solution to Problem]

In order to solve the above problem, the disclosure provides a method performed by a first transmission node of a communication system, the method including obtaining a second scheduling offset value for a second uplink transmission of a second transmission node, obtaining information on the second uplink transmission of the second transmission node, determining whether the second uplink transmission of the second transmission node is to collide with a first uplink transmission to be performed by the first transmission node, based on the scheduling offset and the information on the second uplink transmission, in case that the second uplink transmission does not collide with the first uplink transmission, transmitting information scheduling the first uplink transmission to a terminal, and receiving the first uplink transmission from the terminal after a first scheduling offset.

In addition, the disclosure provides a method performed by a terminal of a communication system, the method including receiving information scheduling a second uplink transmission from a second transmission node, the second uplink transmission being performed after a second scheduling offset after reception of the information scheduling the second uplink transmission, receiving information scheduling a first uplink transmission from a first transmission node, the first uplink transmission being performed after a first scheduling offset after reception of the information scheduling the first uplink transmission, and performing the first uplink transmission and the second uplink transmission, wherein the second scheduling offset is greater than a sum of the first scheduling offset and a grant sharing (GS) delay between the second transmission node and the first transmission node.

In addition, the disclosure provides a first transmission node of a communication system, the first transmission node including a transceiver and a controller configured to perform control to obtain a second scheduling offset value for a second uplink transmission of a second transmission node, obtain information on the second uplink transmission of the second transmission node, determine whether the second uplink transmission of the second transmission node is to collide with a first uplink transmission to be performed by the first transmission node, based on the scheduling offset and the information on the second uplink transmission, in case that the second uplink transmission does not collide with the first uplink transmission, transmit information scheduling the first uplink transmission to a terminal, and receive the first uplink transmission from the terminal after a first scheduling offset.

In addition, the disclosure provides a terminal of a communication system, the terminal including a transceiver and a controller configured to perform control to receive information scheduling a second uplink transmission from a second transmission node, the second uplink transmission being performed after a second scheduling offset after reception of the information scheduling the second uplink transmission, receive information scheduling a first uplink transmission from a first transmission node, the first uplink transmission being performed after a first scheduling offset after reception of the information scheduling the first uplink transmission, and perform the first uplink transmission and the second uplink transmission, wherein the second scheduling offset is greater than a sum of the first scheduling offset and a grant sharing (GS) delay between the second transmission node and the first transmission node.

[Advantageous Effects of Invention]

According to an embodiment of the disclosure, a terminal may report, to a base station, the change in an uplink communication environment caused by simultaneous use of multiple panels without reporting additional information. Accordingly, the base station may indicate uplink communication suitable for the number of panels of the terminal, and the terminal is able to perform efficient uplink communication without being limited to various panel implementation methods.
Advantageous effects obtainable from the disclosure may not be limited to the above - mentioned effects, and other effects which are not mentioned may be clearly understood, through the following descriptions, by those skilled in the art to which the disclosure pertains.

[Brief Description of Drawings]

FIG. 1 illustrates a basic structure of a time-frequency domain, which is a radio resource domain used to transmit data or control channels, in a 5G system.
FIG. 2 illustrates an example of a structure of a frame, a subframe, and a slot in a 5G system.
FIG. 3 illustrates an example of a CORESET used to transmit a downlink control channel in a 5G wireless communication system.
FIG. 4 illustrates an example of a basic unit of time and frequency resources constituting a downlink control channel available in a 5G system.
FIG. 5 illustrates an example of base station beam allocation according to TCI state configuration.
FIG. 6 illustrates an example of a PDCCH beam allocation method in an NR system.
FIG. 7 illustrates a TCI indication MAC CE signaling structure for a PDCCH DMRS.
FIG. 8 illustrates an example of beam configuration with regard to a CORESET and a search space.
FIG. 9 illustrates an example of frequency domain resource allocation with regard to a PDSCH in a 5G system.
FIG. 10 illustrates an example of time domain resource allocation with regard to a PDSCH in a 5G system.
FIG. 11 illustrates an example of time domain resource allocation according to a subcarrier spacing with regard to a data channel and a control channel in a 5G system.
FIG. 12A illustrates an example of a process for beam configuration and activation with regard to a PDSCH.
FIG. 12B illustrates an example of an MAC-CE structure for PDSCH TCI state activation/deactivation.
FIG. 13 is a diagram illustrating an example of an antenna port configuration and resource allocation for transmitting a PDSCH by using cooperative communication in a wireless communication system.
FIG. 14 is a diagram illustrating a configuration example of DCI for NC-JT wherein respective TRPs transmit different PDSCHs or different PDSCH layers to a UE in a wireless communication system.
FIG. 15 is a diagram illustrating an example of an enhanced PDSCH TCI state activation/deactivation MAC-CE structure.
FIG. 16 is a flowchart illustrating an example of UL transmission control and transmission according to an S-DCI technique.
FIG. 17 is a flowchart illustrating an example of UL transmission control and transmission according to an M-DCI technique.
FIG. 18 is a diagram illustrating an example of occurrence of UL transmission collision of a UE in an M-DCI technique.
FIG. 19 is a diagram illustrating respective examples of occurrence and non-occurrence of UL transmission collision when simultaneous UL transmission is indicated to a multi-panel UE.
FIG. 20 is a diagram illustrating an example in which it is possible for a second TRP to distinguish a simultaneous transmission slot according to configuration of a K2 value.
FIG. 21 is a diagram illustrating another example in which it is possible for a second TRP to distinguish a single transmission slot according to configuration of a K2 value.
FIG. 22 is a diagram illustrating an example in which UL transmission collision of a UE occurs according to configuration of a K2 value not following a method proposed in the disclosure.
FIG. 23 is a diagram illustrating an example of an operation of a TRP for performing the disclosure.
FIG. 24 is a diagram illustrating an operation of a UE for performing the disclosure.

FIG. 25 illustrates a structure of a UE in a wireless communication system according to an embodiment of the disclosure.

FIG. 26 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" may refer to a radio link via which a base station transmits a signal to a terminal, and an "uplink (UL)" may refer to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported.

The services considered in the 5G communication system include enhanced mobile broadband (eMBB) communication, massive machine-type communication (mMTC), ultra-reliability low-latency communication (URLLC), and the like. The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

Hereinafter, a frame structure of a 5G system will be described in more detail with reference to the accompanying drawings.

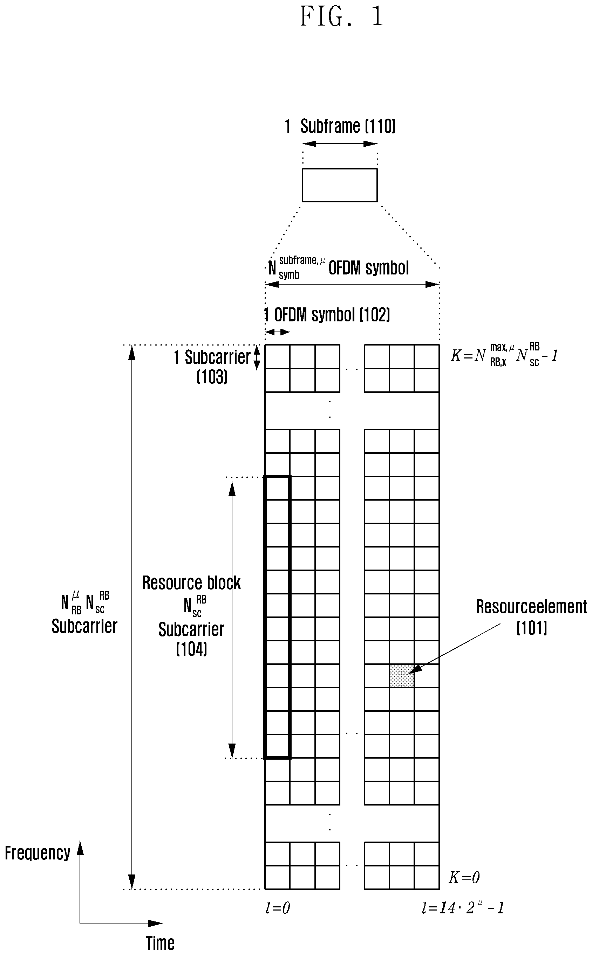

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104.

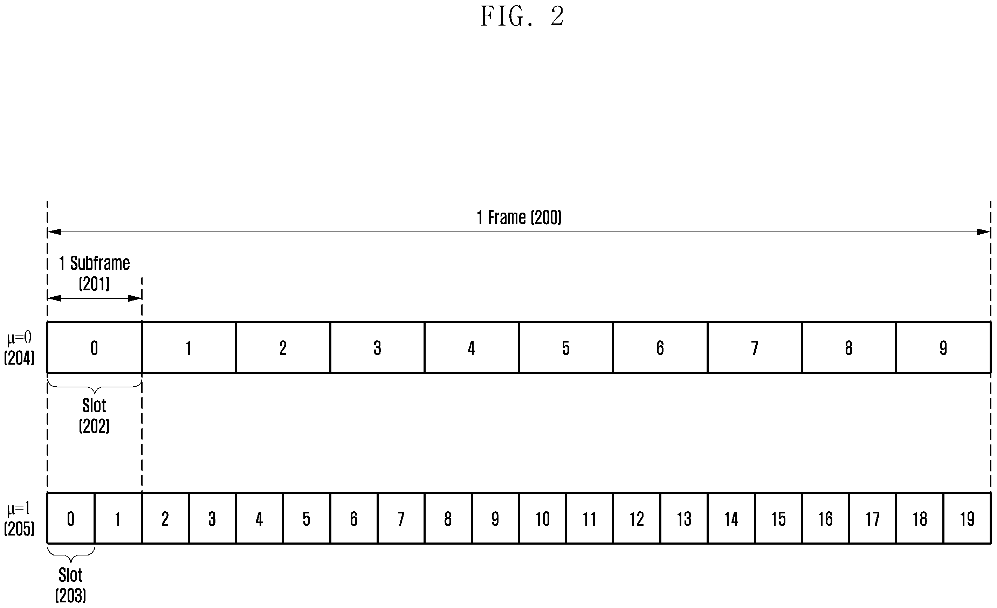

FIG. 2 illustrates a structure of a frame, a subframe, and a slot in a 5G system.

FIG. 2 illustrates an example of a structure of a frame 200, a subframe 201, and a slot 202. One frame 200 may be defined as 10ms. One subframe 201 may be defined as 1 millisecond (ms), and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205).

In the case of $\mu=0$ (204), one subframe 201 may include one slot 202, and in the case of $\mu=1$ (205), one subframe 201 may include two slots 203. That is, the number of slots per one subframe $N_{slot}^{sunframe,\mu}$ may differ depending on the subcarrier spacing configuration value $\mu$, and the number of slots per one frame $N_{slot}^{frame,\mu}$ may differ accordingly. $N_{slot}^{sunframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Hereinafter, bandwidth part (BWP) configuration in a 5G communication system will be described in detail with reference to the accompanying drawings.

A base station may configure one or multiple bandwidth parts for a UE, and may configure the following pieces of information with regard to each bandwidth part as given in Table 2 below.

[Table 2]

```
BWP ::=                              SEQUENCE {
    bwp-Id                                    BWP-Id,
    (bandwidth part identifier)
    locationAndBandwidth             INTEGER (1..65536),
    (bandwidth part location)
    subcarrierSpacing                ENUMERATED {n0, n1, n2, n3, n4, n5},
    (subcarrier spacing)
    cyclicPrefix                           ENUMERATED { extended }
    (cyclic prefix)
}
```

Obviously, the above example is not limiting, and various parameters related to the bandwidth part may be configured for the UE, in addition to the above configuration information. The above pieces of information may be transferred from the base station to the UE through upper layer signaling, for example, radio resource control (RRC) signaling. One configured bandwidth part or at least one bandwidth part among multiple configured bandwidth parts may be activated. Whether or not to activate a configured bandwidth part may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding CORESET #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The initial bandwidth part may be used not only for the purpose of receiving the SIB, but also for other system information (OSI), paging, random access, or the like.

Next, synchronization signal/physical broadcast channel (SS/PBCH) blocks in a 5G communication system will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides essential system information necessary for the UE's data channel and control channel transmission/reception. The essential system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and CORESET #0 may be configured for the UE from the MIB. The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0, and may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

Next, DCI in a 5G system will be described in detail.

In a 5G system, a base station may transfer scheduling information regarding uplink data (or physical uplink shared channel (PUSCH)) or downlink data (or physical downlink shared channel (PDSCH)) to a UE through DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check is attached to the DCI message payload, and the CRC may be scrambled by a radio network temporary identifier (RNTI) corresponding to the identity of the UE. Different RNTIs may be used according to the purpose of the DCI message (for example, UE-specific data transmission, power control command, or random access response, or the like). That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling the PUSCH, and the CRC may be scrambled by a C-RNTI. DCI format 0_0 in which the CRC is scrambled by a C-RNTI may include the following pieces of information given in Table 3 below, for example.

[Table 3]

| |
|---|
| - Identifier for DCI formats - [1] bit |
| - Frequency domain resource assignment - $[\lceil log_2(N_{RB}^{UL,BWP}(N_{RB}^{UL,BWP}+1)/2)\rceil \ ]$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |

(continued)

> - Transmit power control (TPC) command for scheduled PUSCH - [2] bits
>
> - Uplink/supplementary uplink (UL/SUL) indicator - 0 or 1 bit

DCI format 0_1 may be used as non-fallback DCI for scheduling the PUSCH, and the CRC may be scrambled by a C-RNTI. DCI format 0_1 in which the CRC is scrambled by a C-RNTI may include the following pieces of information given in Table 4 below, for example.

[Table 4]

> - Carrier indicator - 0 or 3 bits
>
> - UL/SUL indicator - 0 or 1 bit
>
> - Identifier for DCI formats - [1] bits
>
> - Bandwidth part indicator - 0, 1 or 2 bits
>
> - Frequency domain resource assignment
>
> - For resource allocation type 0, $\left\lceil N_{\mathrm{RB}}^{\mathrm{UL,BWP}}/P \right\rceil$ bits
>
> - For resource allocation type 1, $\left\lceil log_2( N_{\mathrm{RB}}^{\mathrm{UL,BWP}}(N_{\mathrm{RB}}^{\mathrm{UL,BWP}} + 1)/2) \right\rceil$ bits
>
> - Time domain resource assignment - 1, 2, 3, or 4 bits
>
> - Virtual resource block (VRB)-to-physical resource block (PRB) mapping - 0 or 1 bit, only for resource allocation type 1.
>
> ∘ 0 bit if only resource allocation type 0 is configured;
>
> ∘ 1 bit otherwise.
>
> - Frequency hopping flag - 0 or 1 bit, only for resource allocation type 1.
>
> ∘ 0 bit if only resource allocation type 0 is configured;
>
> ∘ 1 bit otherwise.
>
> - Modulation and coding scheme - 5 bits
>
> - New data indicator - 1 bit
>
> - Redundancy version - 2 bits
>
> - HARQ process number - 4 bits
>
> - 1st downlink assignment index - 1 or 2 bits
>
> ∘ 1 bit for semi-static HARQ-ACK codebook;
>
> ∘ 2 bits for dynamic HARQ-ACK codebook with single HARQ-ACK codebook.
>
> - 2nd downlink assignment index - 0 or 2 bits
>
> ∘ 2 bits for dynamic HARQ-ACK codebook with two HARQ-ACK sub-codebooks;
>
> ∘ 0 bit otherwise.
>
> - TPC command for scheduled PUSCH - 2 bits

> - SRS resource indicator - $\left\lceil log_2 \left( \sum_{k=1}^{L_{max}} \binom{N_{\mathrm{SRS}}}{k} \right) \right\rceil$ or $\left\lceil log_2(N_{\mathrm{SRS}}) \right\rceil$ bits
>
> ∘ $\left\lceil log_2 \left( \sum_{k=1}^{L_{max}} \binom{N_{\mathrm{SRS}}}{k} \right) \right\rceil$ bits for non-codebook based PUSCH transmission;
>
> ∘ $\left\lceil log_2(N_{\mathrm{SRS}}) \right\rceil$ bits for codebook based PUSCH transmission.
>
> - Precoding information and number of layers - up to 6 bits
>
> - Antenna ports - up to 5 bits

(continued)

- SRS request - 2 bits

- CSI request - 0, 1, 2, 3, 4, 5, or 6 bits

- Code block group (CBG) transmission information - 0, 2, 4, 6, or 8 bits

- Phase tracking reference signal (PTRS)-demodulation reference signal (DMRS) association - 0 or 2 bits.

- beta_offset indicator - 0 or 2 bits

- DMRS sequence initialization - 0 or 1 bit

DCI format 1_0 may be used as fallback DCI for scheduling the PDSCH, and the CRC may be scrambled by a C-RNTI. DCI format 1_0 in which the CRC is scrambled by a C-RNTI may include the following pieces of information given in Table 5 below, for example.

[Table 5]

- Identifier for DCI formats - [1] bit

- Frequency domain resource assignment - $\left\lceil \left\lceil log_2(N_{RB}^{DL,BWP}(N_{RB}^{DL,BWP}+1)/2)\right\rceil \ \right\rceil$ bits

- Time domain resource assignment - X bits

- VRB-to-PRB mapping - 1 bit.

- Modulation and coding scheme - 5 bits

- New data indicator - 1 bit

- Redundancy version - 2 bits

- HARQ process number - 4 bits

- Downlink assignment index - 2 bits

- TPC command for scheduled PUCCH - [2] bits

- Physical uplink control channel (PUCCH) resource indicator - 3 bits

- PDSCH-to-HARQ feedback timing indicator - [3] bits

DCI format 1_1 may be used as non-fallback DCI for scheduling the PDSCH, and the CRC may be scrambled by a C-RNTI. DCI format 1_1 in which the CRC is scrambled by a C-RNTI may include the following pieces of information given in Table 3 below, for example.

[Table 6]

- Carrier indicator - 0 or 3 bits

- Identifier for DCI formats - [1] bits

- Bandwidth part indicator - 0, 1 or 2 bits

- Frequency domain resource assignment

∘ For resource allocation type 0, $\left\lceil N_{RB}^{DL,BWP}/P\right\rceil$ bits

∘ For resource allocation type 1, $\left\lceil log_2(N_{RB}^{DL,BWP}(N_{RB}^{DL,BWP}+1)/2)\right\rceil$ bits

- Time domain resource assignment -1, 2, 3, or 4 bits

- VRB-to-PRB mapping - 0 or 1 bit, only for resource allocation type 1.

∘ 0 bit if only resource allocation type 0 is configured;

∘ 1 bit otherwise.

- Physical resource block (PRB) bundling size indicator - 0 or 1 bit

(continued)

- Rate matching indicator - 0, 1, or 2 bits

- Zero power (ZP) channel state information (CSI)-reference signal (RS) trigger - 0, 1, or 2 bits

For transport block 1:

- Modulation and coding scheme - 5 bits

- New data indicator - 1 bit

- Redundancy version - 2 bits

For transport block 2:

- Modulation and coding scheme - 5 bits

- New data indicator - 1 bit

- Redundancy version - 2 bits

- HARQ process number - 4 bits

- Downlink assignment index - 0 or 2 or 4 bits

- TPC command for scheduled PUCCH - 2 bits

- PUCCH resource indicator - 3 bits

- PDSCH-to-HARQ_feedback timing indicator - 3 bits

- Antenna ports - 4, 5 or 6 bits

- Transmission configuration indication - 0 or 3 bits

- SRS request - 2 bits

- Code block group (CBG) transmission information - 0, 2, 4, 6, or 8 bits

- CBG flushing out information - 0 or 1 bit

- DMRS sequence initialization - 1 bit

Hereinafter, a downlink control channel in a 5G system will be described in more detail with reference to the accompanying drawings.

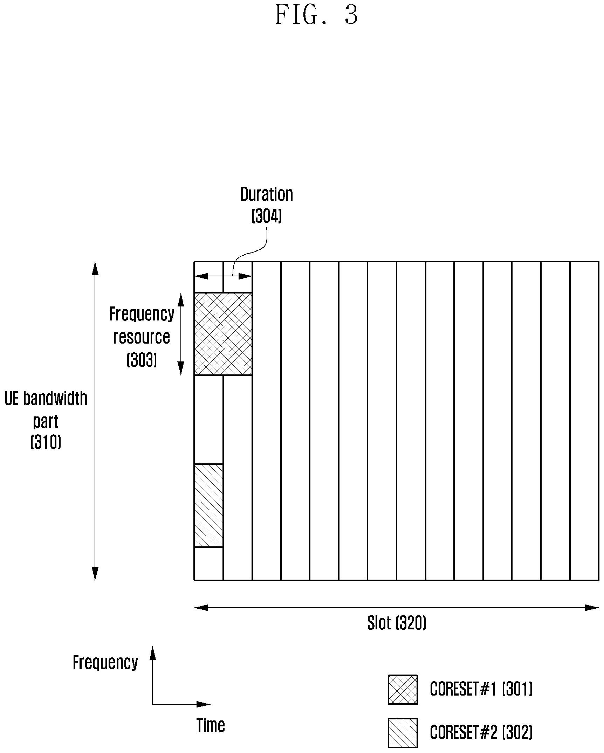

FIG. 3 illustrates an example of a CORESET used to transmit a downlink control channel in a 5G wireless communication system. FIG. 3 illustrates an example in which a UE bandwidth part 310 is configured along the frequency axis, and two CORESETs (CORESET #1 301 and CORESET #2 302) are configured within one slot 320 along the time axis. The CORESETs 301 and 302 may be configured in a specific frequency resource 303 within the entire UE bandwidth part 310 along the frequency axis. One or multiple OFDM symbols may be configured along the time axis, and this may be defined as a control resource set duration 304. Referring to the example illustrated in FIG. 3, CORESET #1 301 is configured to have a CORESET duration of two symbols, and CORESET #2 302 is configured to have a CORESET duration of one symbol.

A CORESET in 5G as described above may be configured for a UE by a base station through upper layer signaling. The description that a CORESET is configured for a UE means that information such as the identity of a CORESET, the frequency location of a CORESET, and the symbol duration of a CORESET is provided. For example, the CORESET may include the following pieces of information given in Table 7 below.

[Table 7]

| ControlResourceSet ::= | SEQUENCE { |
|---|---|
| -- Corresponds to L1 parameter 'CORESET-ID' | |
| controlResourceSetId | ControlResourceSetId, |
| (control resource set identity)) | |

```
        frequencyDomainResources                    BIT STRING (SIZE (45)),
        (frequency domain resource allocation information)
        duration                                     INTEGER (1..maxCoReSetDuration),
        (time domain resource allocation information)
        cce-REG-MappingType                                          CHOICE {
        (CCE-to-REG mapping type)
            interleaved                              SEQUENCE {
            reg-BundleSize                           ENUMERATED {n2, n3, n6},
                (REG bundle size)
                precoderGranularity                  ENUMERATED {sameAsREG-
bundle, allContiguousRBs},
                interleaverSize                      ENUMERATED  {n2,  n3,  n6}

        (interleaver size)
            shiftIndex
        INTEGER(0..maxNrofPhysicalResourceBlocks-1)
        OPTIONAL
            (interleaver shift)
            },
        nonInterleaved                                              NULL
        },
        tci-StatesPDCCH                          SEQUENCE(SIZE    (1..maxNrofTCI-
StatesPDCCH)) OF TCI-StateId                              OPTIONAL,
        (QCL configuration information)
        tci-PresentInDCI                             ENUMERATED {enabled}
                                                         OPTIONAL,    --
Need S
        }
```

In Table 7, tci-StatesPDCCH (simply referred to as transmission configuration indication (TCI) state) configuration information may include information of one or multiple SS/PBCH block index or channel state information reference signal (CSI-RS) index, which is quasi-co-located with a DMRS transmitted in a corresponding CORESET.

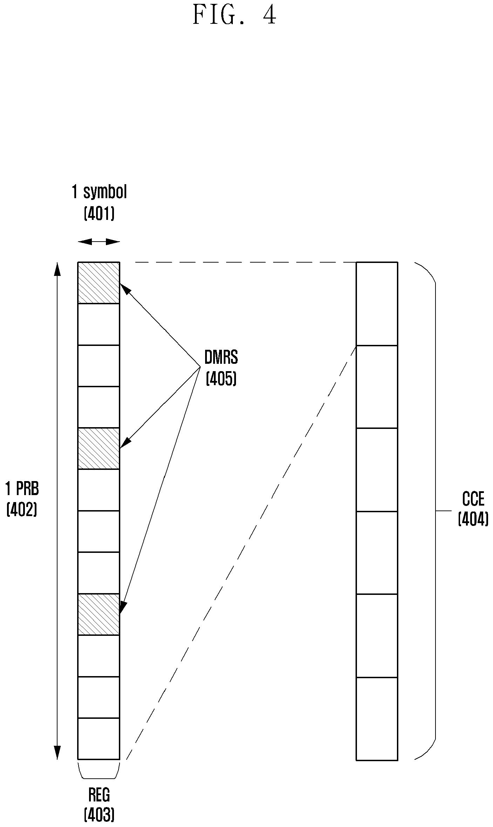

FIG. 4 illustrates an example of a basic unit of time and frequency resources constituting a downlink control channel available in a 5G system. Referring to FIG. 4, the basic unit of time and frequency resources constituting a control channel may be referred to as a resource element group (REG) 403, and the REG 403 may be defined by one OFDM symbol 401 along the time axis and one physical resource block (PRB) 402, that is, 12 subcarriers, along the frequency axis. The base station may configure a downlink control channel allocation unit by concatenating the REGs 403.

Provided that the basic unit of downlink control channel allocation in a 5G system is a control channel element (CCE) 404 as illustrated in FIG. 4, one CCE 404 may include multiple REGs 403. To describe the REG 403 illustrated in FIG. 4, for example, the REG 403 may include 12 REs, and if one CCE 404 includes six REGs 403, one CCE 404 may then include 72 REs. Once a CORESET is configured, the corresponding region may include multiple CCEs 404, and a specific downlink control channel may be mapped to one or multiple CCEs 404 and then transmitted according to the aggregation level (AL) in the CORESET. The CCEs 404 in the CORESET may be distinguished by numbers, and the numbers of CCEs 404 may be allocated according to a logical mapping scheme.

The basic unit of the downlink control channel illustrated in FIG. 4, that is, the REG 403, may include both REs to which DCI is mapped, and an area to which a reference signal (DMRS 405) for decoding the same is mapped. As in FIG. 4, three DRMSs 405 may be transmitted inside one REG 403. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs.

The UE needs to detect a signal while being no information regarding the downlink control channel, and thus a

13

search space indicating a set of CCEs has been defined for blind decoding. The search space is a set of downlink control channel candidates including CCEs which the UE needs to attempt to decode at a given AL. Since 1, 2, 4, 8, or 16 CCEs constitute a bundle at various ALs, the UE may have multiple search spaces. A search space set may be defined as a set of search spaces at all configured ALs.

Search spaces may be classified into common search spaces and UE-specific search spaces. A group of UEs or all UEs may search a common search space of the PDCCH in order to perform dynamic scheduling regarding system information. For example, PDSCH scheduling allocation information for transmitting an SIB including a cell operator information or the like may be received by searching the common search space of the PDCCH. In the case of a common search space, a group of UEs or all UEs need to receive the PDCCH, and the same may thus be defined as a predetermined set of CCEs. Scheduling allocation information regarding a UE-specific PDSCH or PUSCH may be received by investigating the UE-specific search space of the PDCCH. The UE-specific search space may be defined UE-specifically as a function of various system parameters and the identity of the UE.

In a 5G system, a parameter for a search space regarding a PDCCH may be configured for the UE by the base station through upper layer signaling. For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a CORESET index for monitoring the search space, and the like. For example, the following pieces of information given in Table 8 below may be configured for the UE.

[Table 8]

```
    SearchSpace ::=                                                    SEQUENCE {
            -- Identity of the search space. SearchSpaceId = 0 identifies the SearchSpace configured via
PBCH (MIB) or ServingCellConfigCommon.
            searchSpaceId
            SearchSpaceId,
            (search space identity)
            controlResourceSetId                                       ControlResourceSetId,
            (control resource set identity)
            monitoringSlotPeriodicityAndOffset        CHOICE {
            (monitoring slot level perodicity)
                    sl1                                                         NULL,
                    sl2                                                         INTEGER
(0..1),
                    sl4                                                         INTEGER
(0..3),
                    sl5                                                         INTEGER
(0..4),
                    sl8                                                         INTEGER
(0..7),
                    sl10                                                        INTEGER
(0..9),
                    sl16                                                        INTEGER
(0..15),
                    sl20                                                        INTEGER
(0..19)
            }
                                                              OPTIONAL,
            duration(monitoring duration)                 INTEGER (2..2559)
            monitoringSymbolsWithinSlot                       BIT  STRING  (SIZE
(14))                                                         OPTIONAL,
            (monitoring symbols within slot)
            nrofCandidates                                SEQUENCE {
            (number of PDCCH candidate groups for each aggregation level)
                    aggregationLevel1                         ENUMERATED {n0, n1, n2, n3, n4,
n5, n6, n8},
                    aggregationLevel2                         ENUMERATED {n0, n1, n2, n3, n4,
n5, n6, n8},
                    aggregationLevel4                         ENUMERATED {n0, n1, n2, n3, n4,
n5, n6, n8},
                    aggregationLevel8                         ENUMERATED {n0, n1, n2, n3, n4,
n5, n6, n8},
                    aggregationLevel16                            ENUMERATED  {n0,  n1,
n2, n3, n4, n5, n6, n8}
            },
            searchSpaceType                           CHOICE {
            (search space type)
                    -- Configures this search space as common search space (CSS) and DCI formats
to monitor.
            common                                    SEQUENCE {
```

```
        (common search space)
            }
        ue-Specific                        SEQUENCE {
        (UE-specific search space)
        -- Indicates whether the UE monitors in this USS for DCI formats 0-0 and 1-0 or for formats
0-1 and 1-1.
        formats                            ENUMERATED  {formats0-0-And-1-
0, formats0-1-And-1-1},
            ...
        }
```

According to configuration information, the base station may configure one or multiple search space sets for the UE. According to an embodiment, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the example given below is not limiting.

DCI format 0_0/1_0 with CRC scrambled by C-RNTI, CS-RNTI, SP-CSI-RNTI, RA-RNTI, TC-RNTI, P-RNTI, SI-RNTI
DCI format 2_0 with CRC scrambled by SFI-RNTI
DCI format 2_1 with CRC scrambled by INT-RNTI
DCI format 2_2 with CRC scrambled by TPC-PUSCH-RNTI, TPC-PUCCH-RNTI
DCI format 2_3 with CRC scrambled by TPC-SRS-RNTI

Combinations of DCI formats and RNTIs given below may be monitored in a UE-specific search space. Obviously, the example given below is not limiting.

DCI format 0_0/1_0 with CRC scrambled by C-RNTI, CS-RNTI, TC-RNTI
DCI format 1_0/1_1 with CRC scrambled by C-RNTI, CS-RNTI, TC-RNTI
Enumerated RNTIs may follow the definition and usage given below
C-RNTI: used to schedule a UE-specific PDSCH
TC-RNTI: used to schedule a UE-specific PDSCH
CS-RNTI: used to schedule a semi-statically configured UE-specific PDSCH
RA-RNTI: used to schedule a PDSCH in a random access step
P-RNTI: used to schedule a PDSCH in which paging is transmitted
SI-RNTI: used to schedule a PDSCH in which system information is transmitted
INT-RNTI: used to indicate whether a PDSCH is punctured

Transmit power control for PUSCH RNTI (TPC-PUSCH-RNTI): used to indicate a power control command regarding a PUSCH

Transmit power control for PUCCH RNTI (TPC-PUCCH-RNTI): used to indicate a power control command regarding a PUCCH

Transmit power control for SRS RNTI (TPC-SRS-RNTI): used to indicate a power control command regarding an SRS

The DCI formats enumerated above may follow the definitions given in Table 9 below.

[Table 9]

| DCI format | Usage |
| --- | --- |
| 0_0 | Scheduling of PUSCH in one cell |
| 0_1 | Scheduling of PUSCH in one cell |

(continued)

| DCI format | Usage |
|---|---|
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In a 5G system, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set p
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- i = 0, ..., L -1
- $Y_{p,n_{s,f}^{\mu}} = \left( A_p \cdot Y_{p,n_{s,f}^{\mu}-1} \right) mod D$ , $Y_{p,-1} = n_{RNTI} \neq 0$, $A_p = 39827$ for pmod3 = 0, $A_p = 39829$ for pmod3 = 1, $A_p = 39839$ for pmod3 = 2, D = 65537
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In a 5G system, multiple search space sets may be configured by different parameters (for example, parameters in Table 9), and the group of search space sets monitored by the UE at each timepoint may differ accordingly. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

Hereinafter, QCL and TCI states will be described.

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 10 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL may need to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 10 below.

[Table 10]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 11 below. Referring to Table 11, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference BS, and a QCL type as in Table 10 above.

[Table 11]

```
TCI-State ::=                       SEQUENCE {
    tci-StateId                     TCI-StateId,
    (ID of corresponding TCI state)
    qcl-Type1                       QCL-Info,
    (QCL information of first refernece RS of RS (target RS) referring to corresponding TCI
state ID)
    qcl-Type2                       QCL-Info               OPTIONAL,
    -- Need R
    (QCL information of second refernece RS of RS (target RS) referring to corresponding TCI
state ID)
    ...
}


QCL-Info ::=                        SEQUENCE {
    cell                            ServCellIndex          OPTIONAL,     -- Need R
    (serving cell index of reference RS indicated by corresponding QCL information)
    bwp-Id                          BWP-Id                 OPTIONAL, -- Cond
CSI-RS-Indicated
    (BWP index of reference RS indicated by corresponding QCL information)
    referenceSignal                 CHOICE {
        csi-rs                              NZP-CSI-RS-ResourceId,
        ssb                                 SSB-Index
        (one of CSI-RS ID or SSB ID indicated by corresponding QCL information)
    },
    qcl-Type                        ENUMERATED {typeA, typeB, typeC, typeD},
    ...
}
```

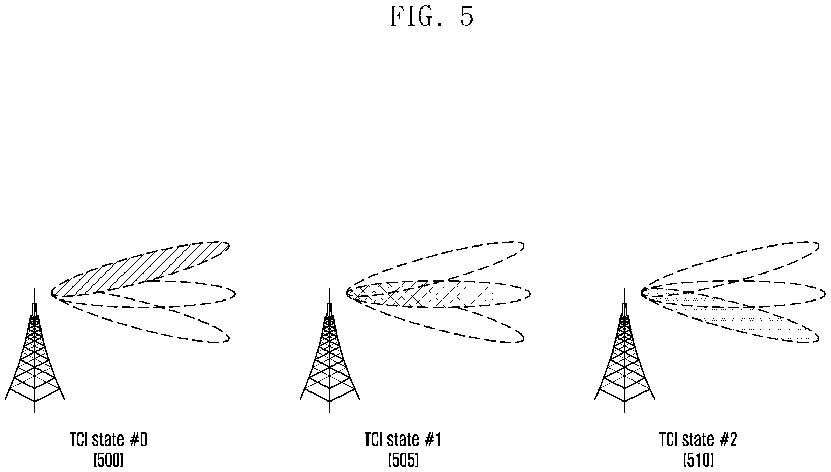

FIG. 5 illustrates an example of base station beam allocation according to TCI state configuration. Referring to FIG. 5, the base station may transfer information regarding N different beams to the UE through N different TCI states. For example, in the case of N=3 as in FIG. 5, the base station may configure qcl-Type2 parameters included in three TCI states 500, 505, and 510 in QCL type D while being associated with CSI-RSs or SSBs corresponding to different beams, thereby notifying that antenna ports referring to the different TCI states 500, 505, and 510 are associated with different spatial Rx parameters (that is, different beams).

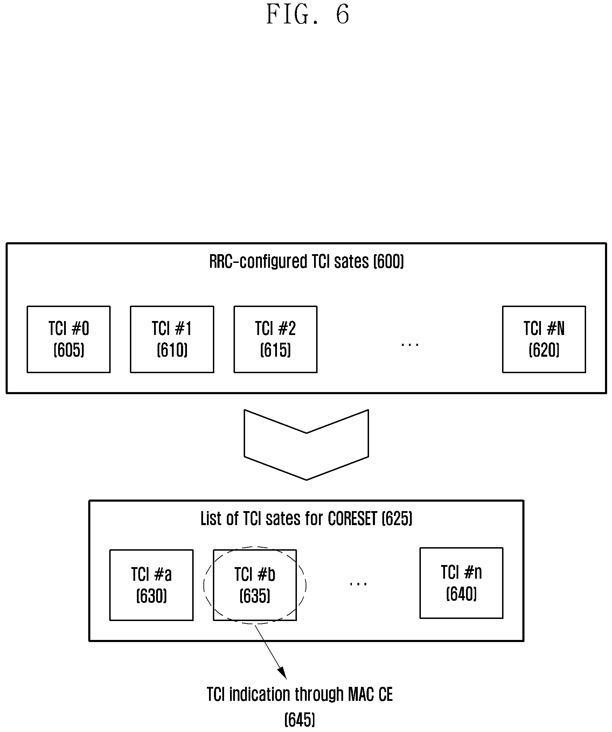

FIG. 6 illustrates an example of a PDCCH beam allocation method in an NR system. In NR, a hierarchical signaling method as illustrated in FIG. 6 is supported for dynamic allocation regarding a PDCCH beam. Referring to FIG. 6, the base station may configure N TCI states 605, 610, ..., 620 for the UE through RRC signaling 600, and may configure some thereof as TCI states for a CORESET (625). The base station may then indicate one of the TCI states 630, 635, and 640 for the CORESET to the UE through MAC CE signaling (645). The UE may then receive a PDCCH, based on beam information included in the TCI state indicated by the MAC CE signaling. That is, based on the activation command regarding the TCI state received through the MAC CE, the UE may correctly receive the DMRS of the corresponding CORESET, based on QCL information in the activated TCI state.

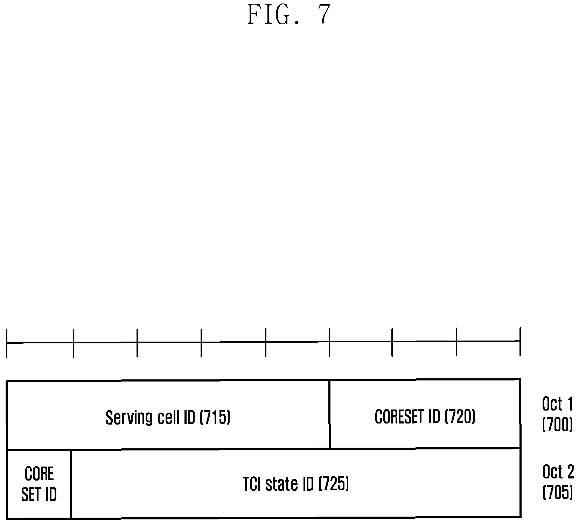

FIG. 7 illustrates a TCI indication MAC CE signaling structure for the PDCCH DMRS. Referring to FIG. 7, the TCI indication MAC CE signaling for the PDCCH DMRS may be configured by 2 bytes (16 bits) 700 and 705, and include a 5-bit serving cell ID 715, a 4-bit CORESET ID 720, and a 7-bit TCI state ID 725.

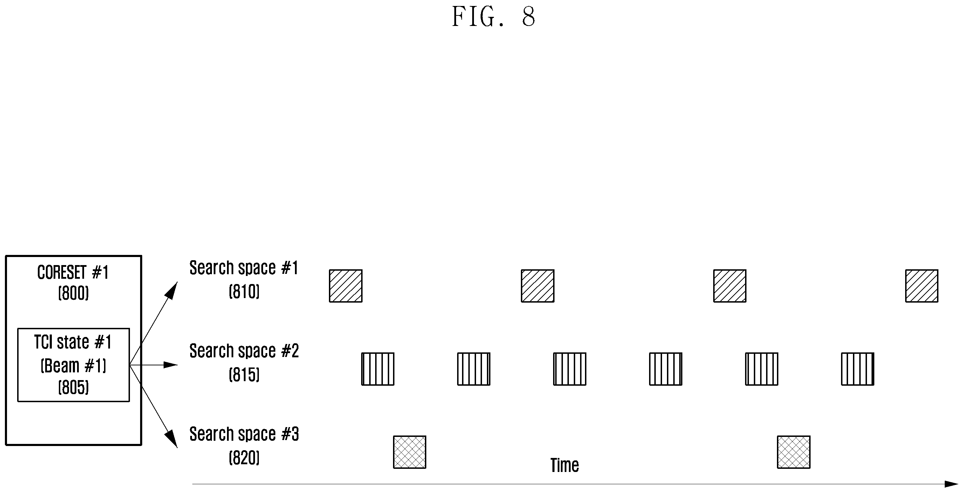

FIG. 8 illustrates an example of beam configuration with regard to a CORESET and a search space. Referring to FIG. 8, the base station may indicate one of TCI state lists included in CORESET 800 configuration through MAC CE signaling (805). Until a different TCI state is indicated for the corresponding CORESET through different MAC CE signaling, the UE may consider that identical QCL information (beam #1) 805 is all applied to one or more search spaces 810, 815, and 820 connected to the CORESET.

With regard to a CORESET having a configured index of 0 (CORESET #0), if the UE has failed to receive a MAC CE activation command regarding the TCI state of CORESET #0, the UE may assume that the DMRS transmitted in CORESET #0 has been QCL-ed with a SS/PBCH block identified in the initial access process, or in a non-contention-based random access process not triggered by a PDCCH command.

With regard to a CORESET having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

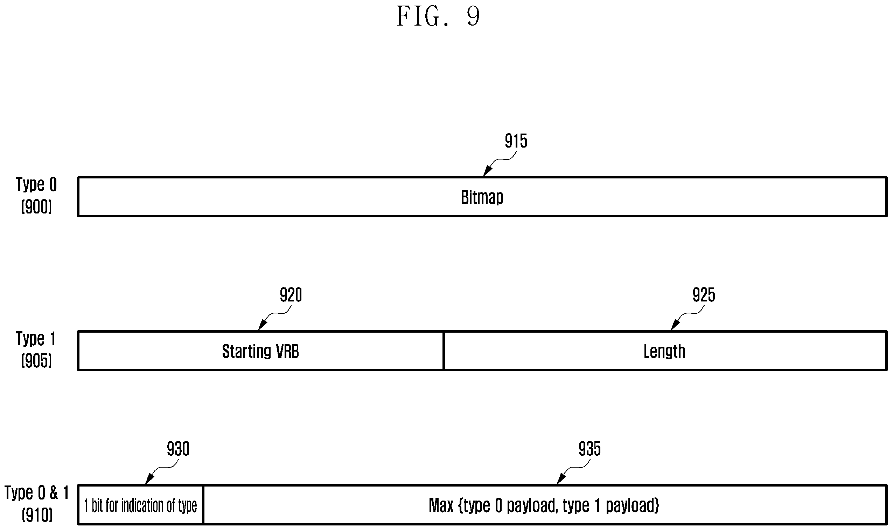

FIG. 9 illustrates an example of frequency domain resource allocation with regard to a PDSCH in a 5G system.

FIG. 9 illustrates three frequency domain resource allocation methods of type 0 900, type 1 905, and dynamic switch 910 which can be configured through an upper layer in an NR wireless communication system.

Referring to FIG. 9, in the case 900 in which a UE is configured to use only resource type 0 through upper layer signaling, partial downlink control information (DCI) for allocating a PDSCH to the corresponding UE includes a bitmap including $N_{RBG}$ bits. As used herein, $N_{RBG}$ refers to the number of resource block groups (RBGs) determined according to the BWP size allocated by a BWP indicator and upper layer parameter rbg-Size, as in Table 12 below, and data is transmitted in RBGs indicated as "1" by the bitmap.

[Table 12]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

In case that the UE is configured to use only resource type 1 through higher layer signaling (indicated by reference numeral 905), some DCI for allocating PDSCHs to the UE includes frequency domain resource allocation information including bits. The base station may thereby configure a starting virtual resource block (starting VRB) 920 and the length 925 of a frequency domain resource allocated continuously therefrom.

In the case 910 in which the UE is configured to use both resource type 0 and resource type 1 through upper layer signaling, partial DCI for allocating a PDSCH to the corresponding UE may include frequency domain resource allocation information including as many bits as the larger value 935 between the payload 915 for configuring resource type 0 and the payload 920 and 925 for configuring resource type 1. One bit may be added to the foremost part (MSB) of the frequency domain resource allocation information inside the DCI, and if the bit has the value of "0", use of resource type 0 may be indicated, and if the bit has the value of "1", use of resource type 1 may be indicated.

Hereinafter, a time domain resource allocation method regarding a data channel in a 5G system will be described.

A base station may configure table regarding time domain resource allocation information regarding a PDSCH and a PUSCH for a UE through upper layer signaling. A table including a maximum of maxNrofDL-Allocations=16 entries may be configured for the PDSCH, and a table including a maximum of maxNrofUI,-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 13 or Table 14 below may be transmitted from the base station to the UE.

[Table 13]

```
PDSCH-TimeDomainResourceAllocationList    ::=    SEQUENCE    (SIZE(1..maxNrofDL-
Allocations)) OF PDSCH-TimeDomainResourceAllocation


PDSCH-TimeDomainResourceAllocation ::=    SEQUENCE {
    k0                                                            INTEGER(0..32)
OPTIONAL,    -- Need S
(PDCCH-to-PDSCH timing, slot unit)
```

```
    mappingType                                          ENUMERATED  {typeA,
typeB},
    (PDSCH mapping type)
    startSymbolAndLength                  INTEGER (0..127)
    (start symbol and length of PDSCH)
}
```

[Table 14]

```
PUSCH-TimeDomainResourceAllocationList    ::=    SEQUENCE    (SIZE(1..maxNrofUL-
Allocations)) OF PUSCH-TimeDomainResourceAllocation


PUSCH-TimeDomainResourceAllocation ::=    SEQUENCE {
    k2                                                            INTEGER(0..32)
OPTIONAL,    -- Need S
(PDCCH-to-PUSCH timing, slot unit)
    mappingType                                          ENUMERATED  {typeA,
typeB},
    (PUSCH mapping type)
    startSymbolAndLength                  INTEGER (0..127)
    (start symbol and length of PUSCH)
}
```

The base station may notify the UF of one of the entries of the table regarding time domain resource allocation information described above through L1 signaling (for example, DCI). For example, one of the entries may be indicated by "time domain resource allocation" field inside DCI. The UE may acquire time domain resource allocation information regarding a PDSCH or PUSCH, based on the DCI acquired from the base station.

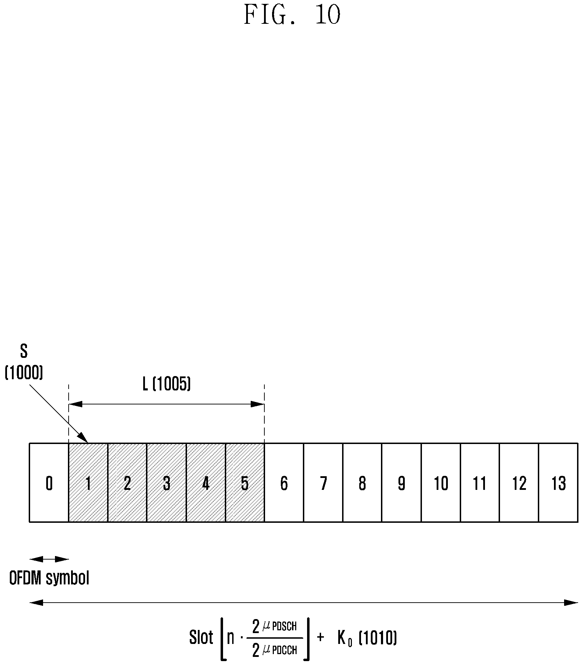

FIG. 10 illustrates an example of time domain resource allocation with regard to a PDSCH in a 5G system.

Referring to FIG. 10, the UE may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 1000 and length 1005 within one slot dynamically indicated through DCI. The indicated PDSCH resource is located in slot $\left[n \times \frac{2^{\mu_{PDSCH}}}{2^{\mu_{PDCCH}}}\right] + K0$ 1010.

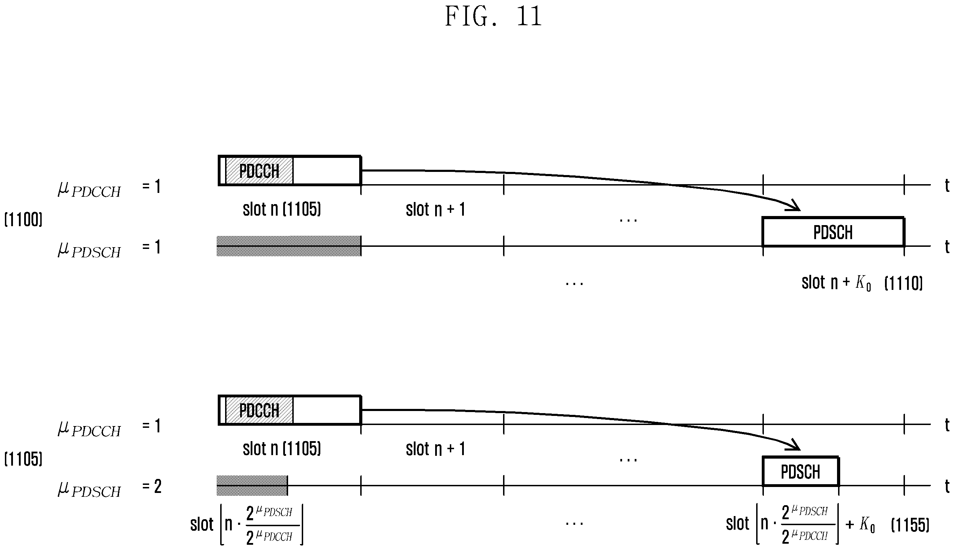

FIG. 11 illustrates an example of time domain resource allocation according to a subcarrier spacing with regard to a data channel and a control channel in a 5G system.

Referring to FIG. 11, if the data channel and the control channel have the same subcarrier spacing 1100 ($\mu_{PDSCH}$ =$\mu_{PDCCH}$), the slot number for the data channel and that for the control channel are identical, and thus the base station and the UE may generate a scheduling offset in conformity with a predetermined slot offset K0. In this case, if the control channel is transmitted in slot n 1105, the data channel may be transmitted in slot n+k0 1110. On the other hand, if the data channel and the control channel have different subcarrier spacings 1150 ($_{PDSCH} \neq \mu_{PDCCH}$), the slot number for data and that for control are different, and the base station and the UE may accordingly generate a scheduling offset in conformity with a predetermined slot offset K0 with reference to the subcarrier spacing of the PDCCH. In this case, if the control channel is transmitted in slot n 1105, the data channel may be transmitted in slot $\left[n \times \frac{2^{\mu_{PDSCH}}}{2^{\mu_{PDCCH}}}\right] + K0$ 1155.

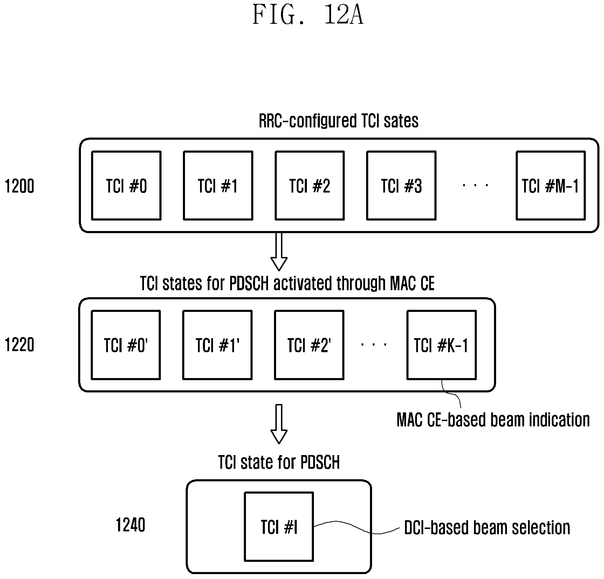

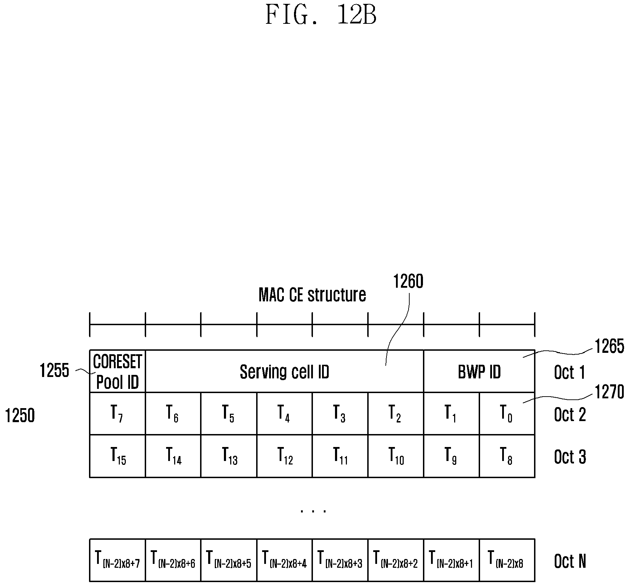

Next, a method for beam configuration with regard to a PDSCH will be described. FIG. 12A illustrates an example of a process for beam configuration and activation with regard to a PDSCH. A list of TCI states regarding a PDSCH may be indicated through an upper layer list such as RRC (1200). The list of TCI states may be indicated by tci-StatesToAddMod-List and/or tci-StatesToReleaseList inside a BWP-specific PDSCH-Config IE, for example. Next, a part of the list of TCI states may be activated through a MAC-CE (1220). The maximum number of activated TCI states may be determined by the capability reported by the UE. FIG. 12B illustrates an example of MAC-CE structure for PDSCH TCI state activation/deactivation.

The MAC CE 1250 includes a CORESET pool ID 1255, a serving cell ID 1260, a BQP ID 1265, and a Ti 1270, and the meaning of respective fields and values configurable for respective fields are as given in Table 15 below.

[Table 15]

| |
|---|
| - Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively; |
| - BWP ID: This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells; |
| - T$_i$ (TCI state ID): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with T$_i$ field set to 1 shall be mapped to the codepoint value 0, second TCI State with Ti field set to 1 shall be mapped to the codepoint value 1 and so on. The maximum number of activated TCI states is 8; |
| - CORESET Pool ID: This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in |
| the MAC CE is configured in a cell list that contains more than one Serving Cell, the CORESET Pool ID field shall be ignored when receiving the MAC CE. |

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

srs-ResourceSetId: an SRS resource set index
srs-ResourceIdList: a set of SRS resource indices referred to by SRS resource sets

resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.

usage: configuration regarding the place of use of SRS resources referred to by SRS resource sets, and may be configured as one of "beamManagement", "codebook", "nonCodebook",and "antennaSwitching".

alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

The base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. The individual configuration information regarding SRS resources may include time domain transmission configuration of SRS resources, and may be configured as one of "periodic", "semi-persistent", and "aperiodic". This may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission by the UE through upper layer signaling or L1 signaling. For example, the base station may activate or deactivate periodic SRS transmission by the UE through upper layer signaling. The base station may indicate activation of an SRS resource set having resourceType configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. The spatial domain transmission filter applied to the transmitted SRS resource may refer to spatial relation info configured for the SRS resource, or may refer to associated CSI-RS configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission by the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. The spatial domain transmission filter applied to the transmitted SRS resource may refer to spatial relation info configured for the SRS resource, or may refer to associated CSI-RS configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through upper layer signaling.

The base station may trigger aperiodic SRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. Slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. The spatial domain transmission filter applied to the transmitted SRS resource may refer to spatial relation info configured for the SRS resource, or may refer to associated CSI-RS configured for the SRS resource set including the SRS resource. The UE may transmit the SRS resource inside the uplink BWP activated with regard to the aperiodic SRS resource triggered through DCI.

When the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. In addition, the minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time.

In addition, if the place of use of the SRS resource set is configured as "codebook" or "antennaSwitching" in view of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 16]

| | |
|---|---|
| SRS-Resource ::= | SEQUENCE { |
|     srs-ResourceId | SRS-ResourceId, |
|     nrofSRS-Ports | ENUMERATED {port1, ports2, ports4}, |
|     ptrs-PortIndex | ENUMERATED {n0, n1 } |
| OPTIONAL,   -- Need R | |
|     transmissionComb | CHOICE { |
|       n2 | SEQUENCE { |
|         combOffset-n2 | INTEGER (0..1), |
|         cyclicShift-n2 | INTEGER (0..7) |
|       }, | |
|       n4 | SEQUENCE { |

```
            combOffset-n4                      INTEGER (0..3),
            cyclicShift-n4                      INTEGER (0..11)
        }
    },
    resourceMapping                     SEQUENCE {
        startPosition                      INTEGER (0..5),
        nrofSymbols                         ENUMERATED {n1, n2, n4},
        repetitionFactor                    ENUMERATED {n1, n2, n4}
    },
    freqDomainPosition              INTEGER (0..67),
    freqDomainShift                 INTEGER (0..268),
    freqHopping                      SEQUENCE {
        c-SRS                              INTEGER (0..63),
        b-SRS                              INTEGER (0..3),
        b-hop                              INTEGER (0..3)
    },
    groupOrSequenceHopping          ENUMERATED { neither, groupHopping,
sequenceHopping },
    resourceType                     CHOICE {
        aperiodic                          SEQUENCE {

            ...
        },
        semi-persistent                 SEQUENCE {
            periodicityAndOffset-sp             SRS-PeriodicityAndOffset,
            ...
        },
        periodic                        SEQUENCE {
            periodicityAndOffset-p              SRS-PeriodicityAndOffset,
            ...
        }
    },
    sequenceId                      INTEGER (0..1023),
    spatialRelationInfo                        SRS-SpatialRelationInfo
OPTIONAL,     -- Need R
    ...
}
```

Configuration information spatialRelationInfo in Table 16 above may be applied, with reference to one reference signal, to a beam used for SRS transmission corresponding to beam information of the corresponding reference signal. For example, configuration of the spatialRelationInfo may include the following pieces of information as given in Table 17 below.

[Table 17]

| SRS-SpatialRelationInfo ::= | SEQUENCE { | |
|---|---|---|
| servingCellId | | ServCellIndex |
| OPTIONAL, -- Need S | | |
| referenceSignal | CHOICE { | |
| ssb-Index | SSB-Index, | |
| csi-RS-Index | NZP-CSI-RS-ResourceId, | |

| srs | SEQUENCE { |
|---|---|
| resourceId | SRS-ResourceId, |
| uplinkBWP | BWP-Id |
| } | |
| } | |
| } | |

Referring to the configuration of the spatialRelationInfo, an SS/PBCH block index, CSI-RS index, or SRS index may be configured as the index of a reference signal to be referred to in order to use beam information of a specific reference signal. Upper signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "ssb-Index", the UE may apply the reception beam which was used to receive the SS/PBCH block corresponding to ssb-Index as the transmission beam for the corresponding SRS transmission.

Next, a PUSCH transmission scheduling scheme will be described. PUSCH transmission may be dynamically scheduled by DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrantConfig including rrc-ConfiguredUplinkGrant in Table 18 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 18 through upper signaling. If PUSCH transmission is operated by a configured grant, parameters applied to the PUSCH transmission are applied through configuredGrantConfig (upper signaling) in Table 18 except for dataScramblingIdentityPUSCH, txConfig, codebookSubset, maxRank, and scaling of UCI-OnPUSCH, which are provided by pusch-Config (upper signaling) in Table 19. If provided with transformPrecoder inside configuredGrantConfig (upper signaling) in Table 18, the UE applies tp-pi2BPSK inside pusch-Config in Table 19 to PUSCH transmission operated by a configured grant.

[Table 18]

| ConfiguredGrantConfig ::= | SEQUENCE { |
|---|---|

```
    frequencyHopping                            ENUMERATED {intraSlot, interSlot}
OPTIONAL,    -- Need S,
    cg-DMRS-Configuration                   DMRS-UplinkConfig,
    mcs-Table                                   ENUMERATED {qam256, qam64LowSE}
OPTIONAL,    -- Need S
    mcs-TableTransformPrecoder                  ENUMERATED {qam256, qam64LowSE}
OPTIONAL,    -- Need S
    uci-OnPUSCH                                 SetupRelease { CG-UCI-OnPUSCH }
OPTIONAL,    -- Need M
    resourceAllocation                      ENUMERATED { resourceAllocationType0,
resourceAllocationType1, dynamicSwitch },
    rbg-Size                                        ENUMERATED {config2}
OPTIONAL,    -- Need S
    powerControlLoopToUse                   ENUMERATED {n0, n1},
    p0-PUSCH-Alpha                          P0-PUSCH-AlphaSetId,
    transformPrecoder                           ENUMERATED {enabled, disabled}
OPTIONAL,    -- Need S
    nrofHARQ-Processes                      INTEGER(1..16),
    repK                                        ENUMERATED {n1, n2, n4, n8},
    repK-RV                                     ENUMERATED {s1-0231, s2-0303, s3-
0000}                                       OPTIONAL,    -- Need R
    periodicity                             ENUMERATED {
                                                sym2, sym7, sym1x14, sym2x14,
sym4x14, sym5x14, sym8x14, sym10x14, sym16x14, sym20x14,
                                                sym32x14, sym40x14, sym64x14,
sym80x14, sym128x14, sym160x14, sym256x14, sym320x14, sym512x14,
                                                sym640x14,          sym1024x14,
sym1280x14, sym2560x14, sym5120x14,
                                                sym6,     sym1x12,     sym2x12,
sym4x12, sym5x12, sym8x12, sym10x12, sym16x12, sym20x12, sym32x12,
                                                sym40x12, sym64x12, sym80x12,
sym128x12, sym160x12, sym256x12, sym320x12, sym512x12, sym640x12,
                                                sym1280x12, sym2560x12
    },
    configuredGrantTimer                            INTEGER (1..64)
OPTIONAL,    -- Need R
    rrc-ConfiguredUplinkGrant               SEQUENCE {
        timeDomainOffset                        INTEGER (0..5119),
        timeDomainAllocation                    INTEGER (0..15),
        frequencyDomainAllocation               BIT STRING (SIZE(18)),
        antennaPort                             INTEGER (0..31),
        dmrs-SeqInitialization                      INTEGER (0..1)
OPTIONAL,    -- Need R
        precodingAndNumberOfLayers              INTEGER (0..63),
        srs-ResourceIndicator                       INTEGER (0..15)
OPTIONAL,    -- Need R
        mcsAndTBS                               INTEGER (0..31),
        frequencyHoppingOffset                      INTEGER (1..
maxNrofPhysicalResourceBlocks-1)            OPTIONAL,    -- Need R
```

```
            pathlossReferenceIndex                          INTEGER (0..maxNrofPUSCH-
PathlossReferenceRSs-1),

            ...
        }
OPTIONAL,      -- Need R

        ...

}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 19, which is upper signaling, is "codebook" or "nonCodebook".

As described above, PUSCH transmission may be dynamically scheduled through DCI format 0_0 or 0_1, and may be configured semi-statically by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 19, the UE does not expect scheduling through DCI format 0_1.

[Table 19]

```
PUSCH-Config ::=                        SEQUENCE {
        dataScramblingIdentityPUSCH                             INTEGER   (0..1023)
OPTIONAL,      -- Need S
        txConfig                             ENUMERATED {codebook, nonCodebook}
OPTIONAL,      -- Need S
        dmrs-UplinkForPUSCH-MappingTypeA        SetupRelease { DMRS-UplinkConfig }
OPTIONAL,      -- Need M
        dmrs-UplinkForPUSCH-MappingTypeB        SetupRelease { DMRS-UplinkConfig }
OPTIONAL,      -- Need M

        pusch-PowerControl                                      PUSCH-PowerControl
OPTIONAL,      -- Need M
        frequencyHopping                        ENUMERATED {intraSlot, interSlot}
OPTIONAL,      -- Need S
        frequencyHoppingOffsetLists          SEQUENCE (SIZE (1..4)) OF INTEGER (1..
maxNrofPhysicalResourceBlocks-1)

OPTIONAL,      -- Need M
        resourceAllocation                   ENUMERATED { resourceAllocationType0,
resourceAllocationType1, dynamicSwitch},
```

```
        pusch-TimeDomainAllocationList                    SetupRelease  {  PUSCH-
TimeDomainResourceAllocationList }                OPTIONAL,    -- Need M
        pusch-AggregationFactor                            ENUMERATED  {  n2,  n4,  n8  }
OPTIONAL,      -- Need S
        mcs-Table                                          ENUMERATED {qam256, qam64LowSE}
OPTIONAL,      -- Need S
        mcs-TableTransformPrecoder                         ENUMERATED {qam256, qam64LowSE}
OPTIONAL,      -- Need S
        transformPrecoder                                  ENUMERATED {enabled, disabled}
OPTIONAL,      -- Need S
        codebookSubset                                                          ENUMERATED
{fullyAndPartialAndNonCoherent, partialAndNonCoherent,nonCoherent}


OPTIONAL, -- Cond codebookBased
        maxRank                                                              INTEGER  (1..4)
OPTIONAL, -- Cond codebookBased
        rbg-Size                                           ENUMERATED  {  config2}
OPTIONAL, -- Need S
        uci-OnPUSCH                                        SetupRelease {  UCI-OnPUSCH}
OPTIONAL, -- Need M
        tp-pi2BPSK                                         ENUMERATED  {enabled}
OPTIONAL, -- Need S
        ...
}
```

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be indicated through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with an SRI through DCI, the SRS resource indicated by the SRI refers to the SRS resource corresponding to the SRI among SRS resources transmitted prior to the PDCCH including the SRI. The TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI is used to indicate a precoder to be applied in the configured SRS resource. If one SRS resource is configured for the UE, the TPMI may be used to indicate a precoder to be applied in the configured SRS resource.

The precoder to be used for PUSCH transmission may be selected from an uplink codebook having the same number of antenna ports as the value of nrofSRS-Ports inside SRS-Config (upper signaling). In connection with codebook-based PUSCH transmission, the UE determines a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE may not expect that the value of codebookSubset (upper signaling) will be configured as "fullyAndPartialAndNonCoherent". In addition, if the UE reported "noncoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical with regard to all SRS resources.

The UE transmit, to the base station, one or multiple SRS resources included in the SRS resource set wherein the value of usage is configured as "codebook" according to upper signaling, and the base station selects one from the SRS resources transmitted by the UE and instructs the UE to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Hereinafter, non-codebook-based PUSCH transmission will be described. The non-codebook-based PUSCH transmission may be dynamically scheduled through DCI format 0_0 or 0_1, and may be operated semi-statically configured by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is positioned in the slot used to transmit the PDCCH including the SRS request field.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo, which is upper signaling regarding the SRS resource, and associatedCSI-RS inside SRS-ResourceSet, which is upper signaling, will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource.

There may be only one configured SRS resource set wherein the value of usage inside SRS-ResourceSet (upper signaling) is "nonCodebook", and a maximum of four SRS resources may be configured for non-codebook-based PUSCH transmission. The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI may indicate an index that may express one SRS resource or a combination of multiple SRS resources. The number of SRS resources indicated by the SRI transmitted by the base station may be the number of transmission layers of the PUSCH, and the UE transmits the PUSCH by applying the precoder applied to SRS resource transmission to each layer.

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in an NR system in consideration thereof. The PUSCH preparation procedure time of the UE may follow Equation 2 given below.

$$[Equation\ 2]$$

$$T_{proc,2} = \max((\ N_2 + d_{2,1} + d_2)(\ 2048 + 144\ )\ \kappa 2^{-\mu} T_c + T_{ext} + T_{switch},\ d_{2,2}\ )$$

Each parameter in $T_{proc,2}$ described above in Equation 4 may have the following meaning.

$N_2$: the number of symbols determined according to UE processing capability 1 or 2, based on the UE's capability, and numerology $\mu$. $N_2$ may have a value in Table 20 if UE processing capability 1 is reported according to the UE's capability report, and may have a value in Table 21 if UE processing capability 2 is reported, and if availability of UE processing capability 2 is configured through upper layer signaling.

[Table 20]

| $\mu$ | PUSCH preparation time $N_2$ [symbols] |
|---|---|
| 0 | 10 |
| 1 | 12 |
| 2 | 23 |
| 3 | 36 |

[Table 21]

| $\mu$ | PUSCH preparation time $N_2$ [symbols] |
|---|---|
| 0 | 5 |
| 1 | 5.5 |
| 2 | 11 for frequency range 1 |

$d_{2,1}$: the number of symbols determined to be 0 if all resource elements of the first OFDM symbol of PUSCH transmission include DM-RSs, and to be 1 otherwise.

$\kappa$: 64

$\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.

$T_c$: has $1/(\Delta f_{max} \cdot N_f)$, $\Delta f_{max} = 480 \cdot 10^3$ $Hz$, $N_f = 4096$..

$d_{2,2}$: follows a BWP switching time if DCI that schedules a PUSCH indicates BWP switching, and has 0 otherwise.

$d_2$: if OFDM symbols overlap temporally between a PUSCH having a high priority index and a PUCCH having a low priority index, the $d_2$ value of the PUSCH having a high priority index is used. Otherwise, $d_2$ is 0.

$T_{ext}$: if the UE uses a shared spectrum channel access scheme, the UE may calculate $T_{ext}$ and apply the same to a PUSCH preparation procedure time. Otherwise, $T_{ext}$ is assumed to be 0.

$T_{switch}$: if an uplink switching spacing has been triggered, $T_{switch}$ is assumed to be the switching spacing time. Otherwise, $T_{switch}$ is assumed to be 0.

The base station and the UE determines that the PUSCH preparation procedure time is insufficient if the first symbol of a PUSCH starts earlier than the first uplink symbol in which a CP starts after Tproc,2 from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determines that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

According to an embodiment of the disclosure, non-coherent joint transmission (NC-JT) may be used to enable a terminal to receive a PDSCH from multiple TRPs.

Unlike conventional systems, a 5G wireless communication system may not only support a service requiring high data rate, but also a service having very short transmission latency and a service requiring high connection density. In a wireless communication network including multiple cells, transmission and reception points (TRPs), or beams, cooperative communication (coordinated transmission) between cells, TRPs, and/or beams may increase the strength of a signal received by a terminal or efficiently perform interference control between cells, TRPs, and/or beams so as to satisfy various service requirements.

Joint transmission (JT) is a representative transmission technology for cooperative communication described above, and, in the technology, a signal is transmitted to one terminal through multiple different cells, TRPs, and/or beams so as to increase the processing rate or the strength of the signal received by the terminal. Channels between cells, TRPs, and/or beams and the terminal may have large difference in the characteristic thereof. Particularly, in a case of non-coherent joint transmission supporting non-coherent precoding between cells, TRPs, and/or beams, individual precoding, an MCS, resource allocation, and TCI indication may be required according to a channel characteristic for each of links between the terminal and the cells, TRPs, and/or beams.

The NC-JT transmission described above may be applied to at least one channel among a PDSCH, a PDCCH, a PUSCH, and a PUCCH. At the time of PDSCH transmission, transmission information, such as precoding, an MCS, resource allocation, and a TCI, is indicated through DL DCI, and the transmission information is required to be independently indicated for each cell, TRP, and/or beam for NC-JT. This is a main reason of increasing a payload required for DL DCI transmission and may adversely affect the reception performance of a PDCCH transmitting DCI. Therefore, in order to support JT of a PDSCH, careful design of the tradeoff between the amount of DCI information amount and the reception performance of control information is necessary.

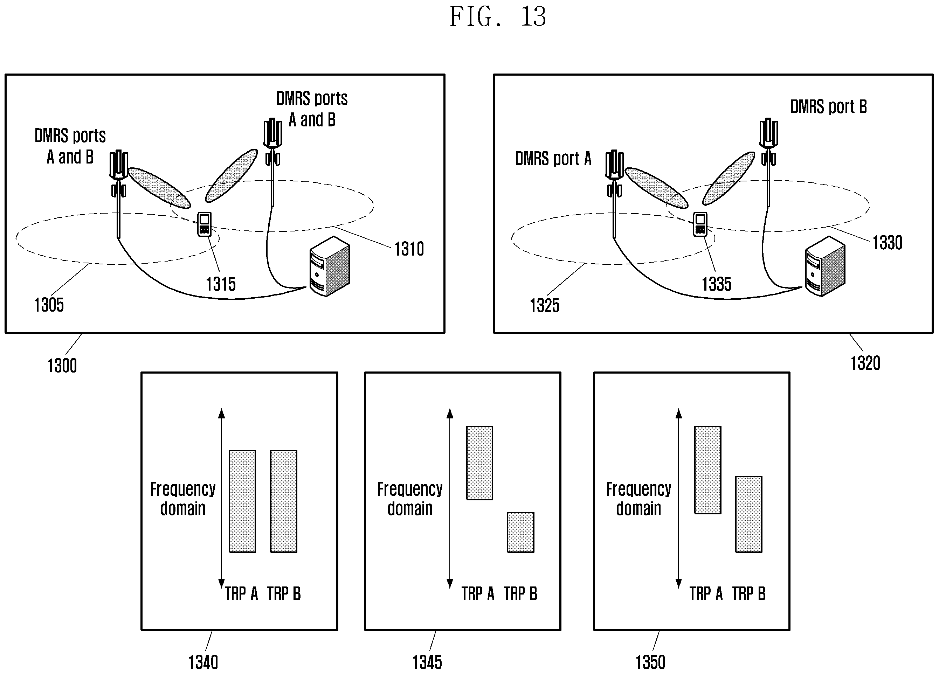

FIG. 13 is a diagram illustrating an example of an antenna port configuration and resource allocation for transmitting a PDSCH by using cooperative communication in a wireless communication system.

Referring to FIG. 13, an example for PDSCH transmission is described for each joint transmission (JT) technique, and embodiments for allocating a wireless resource for each TRP are illustrated.

An example 1300 for coherent joint transmission (C-JT) supporting coherent precoding between cells, TRPs, and/or beams is illustrated. In a case of C-JT, TRP A 1305 and TRP B 1310 transmit single data (PDSCH) to a UE 1315, and multiple TRPs may perform joint precoding. This may imply that a DMRS is transmitted through the same DMRS ports to allow TRP A 1305 and TRP B 1310 to transmit the same PDSCH. For example, each of TRP A 1305 and TRP B 1310 may transmit a DMRS to the UE through DMRS port A and DMRS B. In this case, the UE may receive one piece of DCI information for receiving one PDSCH demodulated based on the DMRS transmitted through DMRS port A and DMRS B.

In addition, an example 1320 for non-coherent joint transmission supporting non-coherent precoding between cells, TRPs, and/or beams for PDSCH transmission is illustrated. In a case of NC-JT, respective cells, TRPs, and/or beams transmit PDSCHs to a UE 1335, and individual precoding may be applied to each PDSCH. Respective cells, TRPs, and/or beams may transmit different PDSCHs or different PDSCH layers to the UE so as to improve a processing rate compared to single cell, TRP, and/or beam transmission. In addition, respective cells, TRPs, and/or beams may repeat transmission of the same PDSCH to the UE so as to improve reliability compared to single cell, TRP, and/or beam transmission. For convenience of explanation, hereinafter, a cell, TRP, and/ beam are collectively called a TRP.

Various wireless resource allocations may be considered as in a case 1340 where frequency and time resources used in multiple TRPs for PDSCH transmission are all the same, a case 1345 where frequency and time resources used in multiple TRPs do not overlap at all, and a case 1350 where some of frequency and time resources used in multiple TRPs overlap.

For NC-JT support, pieces of DCI having various types, structures, and relations may be considered to simultaneously allocate multiple PDSCHs to one UE.

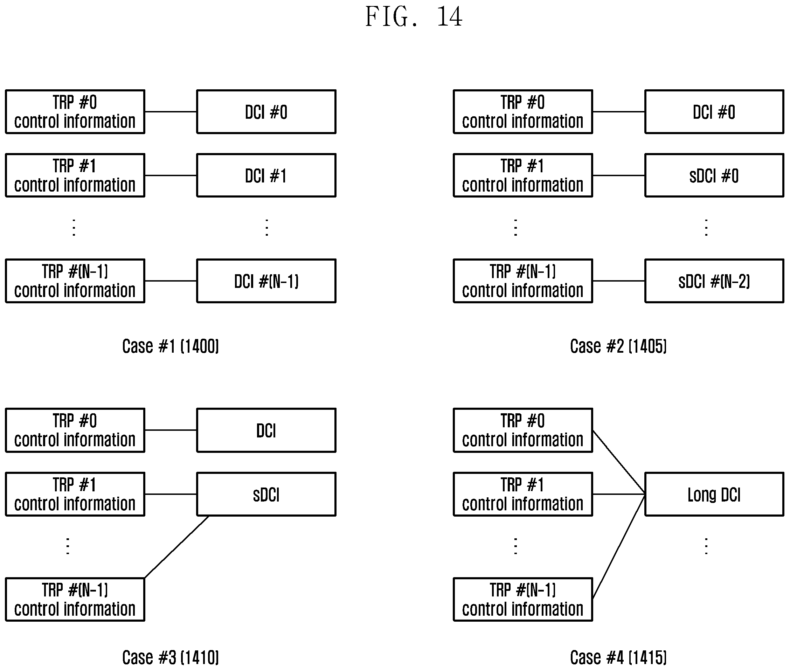

FIG. 14 is a diagram illustrating a configuration example of DCI for NC-JT wherein respective TRPs transmit different PDSCHs or different PDSCH layers to a UE in a wireless communication system.

Referring to FIG. 14, case #1 1400 is an example in which, in a situation where different (N-1) number of PDSCHs are transmitted from additional (N-1) number of TRPs (TRP #1 to TRP #(N-1)) other than a serving TRP (TRP #0) used at the time of single PDSCH transmission, control information for the PDSCHs transmitted from the additional (N-1) number of TRPs is transmitted independently to control information for a PDSCH transmitted from the serving TRP. That is, a UE may obtain control information for PDSCHs transmitted from different TRPs (TRP #0 to TRP #(N-1)) through independent pieces of DCI (DCI #0 to DCI #(N-1)). The formats of the independent pieces of DCI may be identical to or different from each other, and the payloads of the pieces of DCI may also be identical to or different from each other. In case #1 described above, free control or allocation of each PDSCH may be completely ensured, but when pieces of DCI are transmitted from different TRPs, there occurs a difference in coverage between the pieces of DCI and thus reception performance may be degraded.

Case #2 1405 shows an example in which, in a situation where different (N-1) number of PDSCHs are transmitted from additional (N-1) number of TRPs (TRP #1 to TRP #(N-1)) other than a serving TRP (TRP #0) used at the time of single PDSCH transmission, pieces of control information (DCI) for the PDSCHs of the additional (N-1) number of TRPs are transmitted respectively, and each of the pieces of DCI is dependent on control information for a PDSCH transmitted from the serving TRP.

For example, DCI #0 that is the control information for the PDSCH transmitted from the serving TRP (TRP #0) includes all information elements of DCI format 1_0, DCI format 1_1, or DCI format 1_2, but shortened DCI (sDCI #0 to sDCI #(N-2)) that is control information for each of PDSCHs transmitted from cooperative TRPs (TRP #1 to TRP #(N-1)) may include only some of information elements of DCI format 1_0, DCI format 1_1, or DCI format 1_2. Therefore, sDCI transmitting control information for PDSCHs transmitted from the cooperative TRPs has a payload smaller than that of normal DCI (nDCI) transmitting control information related to a PDSCH transmitted from the serving TRP, and thus is able to include reserved bits compared to nDCI.

In case #2 described above, free control or allocation of each PDSCH may be limited according to the contents of information elements included in sDCI, but the reception performance of sDCI is superior to nDCI, and thus a probability of occurrence of a difference in coverage between pieces of DCI may be lowered.

Case #3 1410 shows an example in which, in a situation where different (N-1) number of PDSCHs are transmitted from additional (N-1) number of TRPs (TRP #1 to TRP #(N-1)) other than a serving TRP (TRP #0) used at the time of single PDSCH transmission, one piece of control information for the PDSCHs of the additional (N-1) number of TRPs is transmitted, and the piece of DCI is dependent on control information for a PDSCH transmitted from the serving TRP.

For example, DCI #0 that is the control information for the PDSCH transmitted from the serving TRP (TRP #0) includes all information elements of DCI format 1_0, DCI format 1_1, or DCI format 1_2 and, in a case of control information for PDSCHs transmitted from cooperative TRPs (TRP #1 to TRP #(N-1)), it may be possible to collect only some of information elements of DCI format 1_0, DCI format 1_1, or DCI format 1_2 in one piece of "secondary" DCI (sDCI) and transmit same. For example, the sDCI may include at least one piece of information among pieces of HARQ-related information, such as frequency domain resource allocation, time domain resource allocation, or an MCS of cooperative TRPs. In addition, other information not included in sDCI, such as a BWP indicator or a carrier indicator, may follow DCI (DCI #0 or nDCI) of the serving TRP.

Case #3 1410, free control or allocation of each PDSCH may be limited according to the contents of information elements included in sDCI, but the reception performance of sDCI is controllable and the complexity of DCI blind decoding of a UE may be reduced compared to case #1 1400 or case #2 1405.

Case #4 1415 is an example in which, in a situation where different (N-1) number of PDSCHs are transmitted from additional (N-1) number of TRPs (TRP #1-TRP #(N-1)) other than a serving TRP (TRP #0) used at the time of single PDSCH transmission, control information for the PDSCHs transmitted from the additional (N-1) number of TRPs is transmitted through the same DCI (long DCI) as that of control information for a PDSCH transmitted from the serving TRP. That is, a UE may obtain control information for PDSCHs transmitted from different TRPs (TRP #0-TRP #(N-1)) through single DCI. In case of case #4 1415, the complexity of DCI blind decoding of the UE may not be increased, but PDSCH control or allocation may not be freely performed like the number of cooperative TRPs being limited due to the limitation of a long DCI payload.

In the following description and embodiments, case #1 1400, case #2 1405, and case #3 1410 described above in which one or more pieces of DCI (PDCCHs) are used for NC-JT support are classified as multi-PDCCH (multiple-DCI or M-DCI)-based NC-JT, and case #4 1415 described above in which single DCI (single PDCCH or S-DCI) is used for NC-JT support may be classified as single-PDCCH-based NC-JT. In PDSCH transmission based on multiple PDCCHs, a CORESET in which DCI of a serving TRP (TRP #0) is scheduled may be distinguished from a CORESET in which DCI of cooperative TRPs (TRP #1 to TRP #(N-1)) is scheduled. As a method for distinguishing CORESETs, there may be a method of distinguishment using a higher layer indicator for each CORESET or a method of distinguishment using beam configuration for each CORESET. In addition, in single-PDCCH-based NC-JT, single DCI schedules a single PDSCH having multiple layers rather than scheduling multiple PDSCHs, and the multiple layers may be transmitted from multiple TRPs. The connection relation between a layer and a TRP transmitting the layer may be indicated through a transmission configuration indicator (TCI) indication for the layer.

In embodiments of the disclosure, a "cooperative TRP" may be replaced with various terms including a "cooperative panel" or a "cooperative beam", when actually applied.

In embodiments of the disclosure, "a case where NC-JT is applied" is variously interpretable in accordance with a situation as "a case where a UE simultaneously receives one or more PDSCHs in one BWP", "a case where a UE receives a PDSCH, based on two or more TCI indications simultaneously, in one BWP", and "a case where a PDSCH received by a UE is associated with one or more DMRS port groups". However, for convenience of explanation, one expression is used.

In the disclosure, a wireless protocol structure for NC-JT may be variously used according to a TRP-based scenario. For example, if there is no or a small backhaul delay between cooperative TRPs, a method (CA-like method) using a structure based on MAC layer multiplexing is possible. On the contrary, if a backhaul delay between cooperative TRPs is large enough not to be ignorable (e.g., a time of 2 ms or longer is required for exchange of information, such as CSI, scheduling, or HARQ-ACK, between cooperative TRPs), a method (DC-like method) of using a TRP-specific independent structure from an RLC layer so as to ensure a characteristic resistant to delays is possible.

A UE supporting C-JT and/or NC-JT may receive a parameter or setting value related to C-JT and/or NC-JT from a higher layer configuration, and configure an RRC parameter of the UE, based on the same parameter or setting value. The UE may use a UE capability parameter, for example, tci-StatePDSCH for the higher layer configuration. The UE capability parameter, for example, tci-StatePDSCH may define TCI states for PDSCH transmission, and the number of TCI states may be configured to be 4, 8, 16, 32, 64, or 128 in FR 1 and 64 and 128 in FR 2, and a maximum of 8 states indicatable by 3 bits of a TCI field of DCI among the configured number of TCI states may be configured through a MAC CE message. The maximum value 128 means a value indicated by maxNumberConfiguredTCIstatesPerCC in a tci-StatePDSCH parameter included in UE capability signaling. As described above, a series of configuration processes from a higher layer configuration to a MAC CE configuration may be applied to a beamforming indication or beamforming change command for at least one PDSCH from one TRP.

A multi-DCI (or multi-PDCCH)-based multi-TRP transmission method for NC-JT is described.

In NC-JT based on multiple PDCCHs, at the time of DCI transmission for PDSCH scheduling of each TRP, a CORESET or a search space distinguished by each TRP may be provided. The CORESET or search space for each TRP may be configurable as at least one of the following cases.

* Configuration of higher layer index for each CORESET: CORESET configuration information configured through a higher layer may include an index value, and the configured index value for each CORESET may be used to distinguish a TRP transmitting a PDCCH in a corresponding CORESET. That is, in a set of CORESETs having the same higher layer index value, it may be considered that the same TRP transmits a PDCCH or a PDCCH scheduling a PDSCH of the same TRP is transmitted. The index for each CORESET may be called CORESETPoolIndex, and it may be considered that a PDCCH is transmitted from the same TRP in CORESETs configured to have the same value of CORE SET Pool Index. For a CORESET for which a value of CORESETPoolIndex is not configured, it may be considered that a default value of CORESETPoolIndex is configured, and the default value may be 0.

- In the disclosure, if the number of CORESETPoolIndex types of multiple CORESETs included in the higher layer signaling PDCCH-Config exceeds 1, that is, if each CORESET has a different value of CORESETPoolIndex, a UE may consider that a base station is able to use a multi-DCI-based multi-TRP transmission method.

- On the contrary, in the disclosure, if the number of CORESETPoolIndex types of multiple CORESETs included in the higher layer signaling PDCCH-Config is 1, that is, if all the CORESETs have the same value of CORESETPoolIndex, such as 0 or 1, a UE may consider that a base station performs transmission by using a single TRP without using a multi-DCI-based multi-TRP transmission method.

* Configuration of multiple values of PDCCH-Config: Multiple values of PDCCH-Config are configured in one BWP, each value of PDCCH-Config may include a TRP-specific PDCCH configuration. That is, a CORESET list for each TRP and/or a search space list for each TRP may be configured in one value of PDCCH-Config, and one or more CORESETs and one or more search spaces included in one value of PDCCH-Config may be considered to correspond to a particular TRP.

* CORESET beam/beam group configuration: Through a beam or beam group configured for each CORESET, a TRP corresponding to a corresponding CORESET may be distinguished. For example, if the same TCI state is configured for multiple CORESETs, it may be assumed that the CORESETs are transmitted through the same TRP or a PDCCH scheduling a PDSCH of the same TRP is transmitted in the CORESETs.

* Search space beam/beam group configuration: A beam or beam group is configured for each search space, and a TRP for each search space may be distinguished therethrough. For example, if the same beam/beam group or TCI state is configured for multiple search spaces, it may be assumed that the same TRP transmits a PDCCH in the search spaces or a PDCCH scheduling a PDSCH of the same TRP is transmitted in the search spaces.

A CORESET or search space is distinguished by each TRP as described above, whereby classification of a PDSCH and HARQ-ACK information for each TRP is possible and thus independent generation of a HARQ-ACK codebook and independent usage of PUCCH resources for each TRP are possible.

This configuration may be independent for each cell or each BWP. For example, two different values of CORESETPoolIndex may be configured in a PCell, and on the contrary, a value of CORESETPoolIndex may not be configured in a particular SCell. In this case, it may be assumed that NC-JT is configured in the PCell, but NC-JT is not configured in the SCell in which a value of CORESETPoolIndex is not configured.

A PDSCH TCI state activation/deactivation MAC-CE which is applicable to a multi-DCI-based multi-TRP transmission method may follow FIG. 12B described above. If CORESETPoolIndex for all CORESETs in the higher layer signaling PDCCH-Config is not configured for a UE, the UE may disregard the CORESET pool ID field 1255 in the MAC-CE 1250. If the UE is able to support a multi-DCI-based multi-TRP transmission method, that is, if CORESETs in the higher layer signaling PDCCH-Config have different values of CORESETPoolIndex, the UE may activate a TCI state in DCI included in a PDCCH transmitted in CORESETs having the same value of CORESETPoolIndex as that of the CORESET pool ID field 1255 in the MAC-CE 1250. For example, if the value of the CORESET pool ID field 1255 in the MAC-CE 1250 is 0, a TCI state in DCI included in PDCCHs transmitted from CORESETs having CORESETPoolIndex of 0 may follow activation information of the MAC-CE.

In a case where the UE is configured by the base station to be able to use a multi-DCI-based multi-TRP transmission method, that is, in a case where the number of CORESETPoolIndex types of multiple CORESETs included in the higher layer signaling PDCCH-Config exceeds 1, or in a case where the respective CORESETs have different values of CORESETPoolIndex, the UE may recognize that PDSCHs scheduled by PDCCHs in the respective CORESETs having two different values of CORESETPoolIndex have the following restrictions.

1) If PDSCHs indicated by PDCCHs in respective CORESETs having two different values of CORESETPoolIndex entirely or partially overlap with each other, TCI states indicated by the PDCCHs may be applied to different CDM groups, respectively. That is, two or more TCI states may not be applied to one CDM group.

2) If PDSCHs indicated by PDCCHs in respective CORESETs having two different values of CORESETPoolIndex entirely or partially overlap with each other, the UE may expect that the PDSCHs have the same number of actual front loaded DMRS symbols, the same number of actual additional DMRS symbols, the same position of an actual DMRS symbol, and the same DMRS type.

3) The UE may expect that bandwidth parts indicated by PDCCHs in respective CORESETs having two different values of CORESETPoolIndex are the same and subcarrier spacings indicated thereby are also the same.

4) The UE may expect that information on a PDSCH scheduled by a PDCCH in each of CORESETs having two different values of CORESETPoolIndex is fully included in the PDCCH.

Next, a single-DCI (single-PDCCH)-based multi-TRP transmission method for NC-JT is described.

In the single-DCI-based multi-TRP transmission method, a PDSCH transmitted by multiple TRPs may be scheduled by one DCI. As a method of indicating the number of TRPs transmitting the PDSCH, the number of TCI states may be used. That is, if the number of TCI states indicated by DCI scheduling a PDSCH is 2, transmission may be considered to be single-PDCCH-based NC-JT, and if the number of TCI states is 1, transmission may be considered to be single TRP transmission. The TCI states indicated by the DCI may correspond to one or two TCI states among TCI states activated by a MAC-CE. If TCI states of DCI corresponds to two TCI states activated by a MAC-CE, a TCI codepoint indicated in the DCI and the TCI states activated by the MAC-CE may have a correspondence relation, and this may correspond to a case where the number of the TCI states activated by the MAC-CE and corresponding to the TCI codepoint is 2.

As another example, if at least one codepoint among all codepoints of a TCI state field in DCI indicates two TCI states, a UE may consider that a base station is able to perform transmission based on a single-DCI-based multi-TRP method. The at least one codepoint indicating two TCI states in the TCI state field may be activated through an enhanced PDSCH TCI state activation/deactivation MAC-CE.

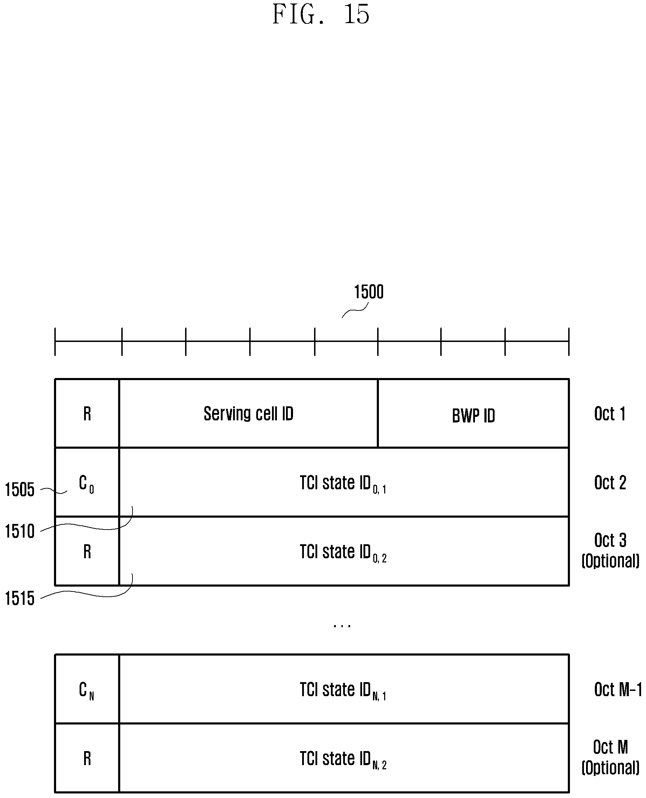

FIG. 15 is a diagram illustrating an example of an enhanced PDSCH TCI state activation/deactivation MAC-CE structure. The meaning of each field in the MAC CE and a value configurable in each field are as follows.

- BWP ID: This field indicates a DL BWP for which the MAC CE applies as the codepoint of the DCI bandwidth part indicator field as specified in TS 38.212 [9]. The length of the BWP ID field is 2 bits
- $C_i$: This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present
- TCI state $ID_{i,j}$: This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e., the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2.

R: Reserved bit, set to "0".

In FIG. 15, if the value of a $C_0$ field 1505 is 1, the MAC-CE may include a TCI state $ID_{0,2}$ field 1515 in addition to a TCI state $ID_{0,1}$ field 1510. This implies that TCI state $ID_{0,1}$ and TCI state $ID_{0,2}$ are activated for the 0-th codepoint of a TCI state field included in DCI, and if the base station indicates the codepoint to the UE, two TCI states may be indicated to the UE. If the value of the $C_0$ field 1505 is 0, the MAC-CE is unable to include the TCI state $ID_{0,2}$ field 1515, and this implies that one TCI state corresponding to TCI state $ID_{0,1}$ is activated for the 0-th codepoint of a TCI state field included in DCI.

This configuration may be independent for each cell or each BWP. For example, the number of activated TCI states corresponding to one TCI codepoint is a maximum of 2 in a PCell, but the number of activated TCI states corresponding to one TCI codepoint may be a maximum of 1 in a particular SCell. In this case, it may be considered that NC-JT is configured in the PCell, but NC-JT is not configured in the SCell.

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, when actually applied, a TRP, a beam, or a TCI state may be appropriately replaced with one of the above terms.

In the following description of the disclosure, upper layer signaling may refer to signaling corresponding to at least one signaling among the following signaling, or a combination of one or more thereof.

- MIB
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- PDCCH
- DCI
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- PUCCH
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

Hereinafter, the above examples may be described through multiple embodiments, but they are not independent of each other, and one or more embodiments may be applied simultaneously or in combination.

As a common technique enabling satisfaction of different requirements from a URLLC service requiring high reliability and an eMBB service requiring a high data rate, an m-TRP technique wherein a UE performs communication through multiple transmission and reception nodes has been standardized through 3GPP Rel-16, and then a method of applying the technique to various channels, such as a PDCCH, a PDSCH, a PUSCH, and a PUCCH, has been proposed through Rel-17. The m-TRP technique is divided into two techniques including a single-DCI technique (S-DCI) of controlling transmission or reception through multiple nodes by using one piece of control information, and a multi-control information technique (M-DCI) of transferring information on each node independently. The S-DCI technique is a technique suitable to be implemented in a network having a relatively simple structure in which only one node among multiple nodes performs UE control, and also suitable to be used in a cell and a base station responsible for communication in a small area. On the other hand, the M-DCI technique used in a situation where multiple nodes perform UE control is expected to be mainly used in a network which provides communication in a relatively wide area and in which nodes are far away from each other.

As a UE communication technique corresponding to a multi-transmission and reception node communication technique, standardization of a multi-panel-based communication technique has partially proceeded and is expected to be additionally performed in the future. The multi-panel-based communication technique is a technique in which a UE performs communication through multiple antenna arrays capable of performing an independent operation, and independent operations and cooperative operations between arrays may increase the entire transmission power or enable communication using more superior beams.

When the S-DCI method is applied, one TRP acts as a main TRP and controls all UL transmission of a UE, and if the M-DCI method is applied, each TRP or multiple TRPs control UL transmission of a UE received by themselves, respectively. In a case of S-DCI method, a TRP performing UL transmission control collects channel information on all uplinks of a UE and information required for UL scheduling, and controls UL transmission for each TRP of the UE, based on the collected information. In the S-DCI method, one TRP is required to collect all UL channel information and thus the complexity of operations for supporting measurement and reporting of the UE and sharing of channel information between TRPs is increased. However, one TRP controls UL transmission of the UE by collectively considering all channel situations and thus it is advantageous in that ensuring more excellent UL performance is possible.

On the contrary, in the M-DCI method, each TRP acquires only UL channel information for a case where UL transmission of a UE is to reach the TRP, and then performs UL transmission control of the UE, based on the UL channel information. Therefore, m-TRP UL transmission of the UE is controllable with only simple operations, compared to the S-DCI method. However, each TRP performs independent control for corresponding UL transmission and thus may request the UE to perform simultaneous UL transmission for multiple TRPs and, in some cases, the UE may recognize that the simultaneous UL transmission is UL transmission collision.

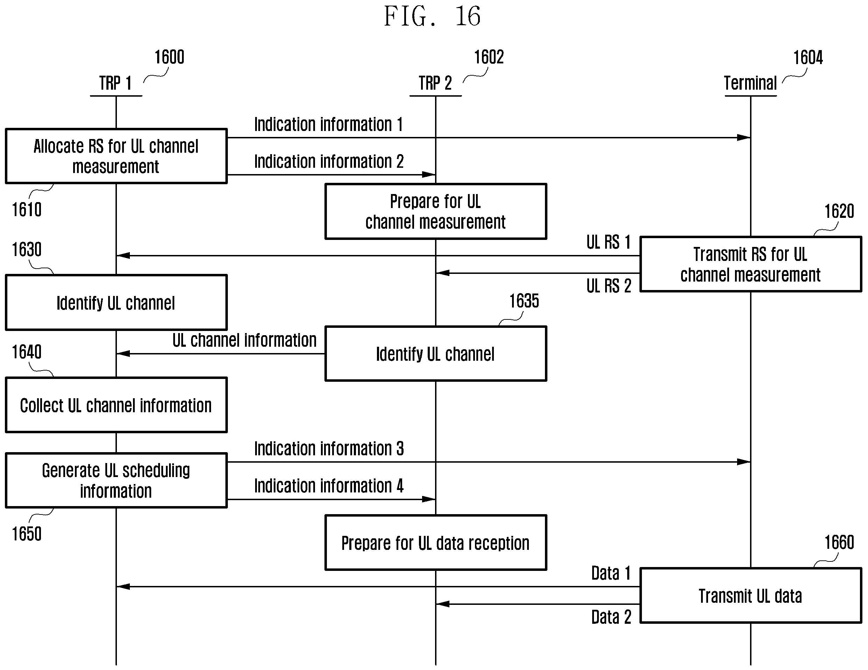

FIG. 16 is a flowchart illustrating an example of UL transmission control and transmission according to an S-DCI technique. In FIG. 16, it is assumed that TRP 1 1600 acts as a main TRP and performs transmission and reception control of TRP 2 1602 and transmission and reception control of a UE 1604.

According to FIG. 16, in indicating UL transmission of the UE, TRP 1 first indicates, to the UE, UL reference signal transmission for UL channel measurement through indication information 1 (operation 1610). The UL reference signal may be an SRS, etc. The reference signal indicated to be transmitted is required to be receivable by each of TRP 1 and TRP 2, and to this end, TRP 1 shares reference signal transmission information (indication information 2) with TRP 2. The UE transmits UL reference signal 1 for TRP 1 and UL reference signal 2 for TRP 2 according to indication information 1 (operation 1620). TRP 1 receives UL reference signal 1 of the UE and identifies a UL channel, based on the reference signal (operation 1630). TRP 2 receives UL reference signal 2 of the UE, based on the shared information and transfers, to TRP 1, UL channel information obtained by measurement based on the reference signal (operation 1635). TRP 1 collects the channel information shared by TRP 2 and channel information obtained by measurement of TRP 1, to identify a UL channel situation between the two TRPs and the UE (operation 1640).

Thereafter, TRP 1 generates UL scheduling information, based on the identified UL channel situation and indicates UL data scheduling to the UE through indication information 3, and shares the UL scheduling information with TRP 2 through indication information 4 (operation 1650). The UE having received indication information 3 may transmit data 1 to TRP 1 and transmit data 2 to TRP 2 (operation 1660).

Detailed information on a UL channel between the UE and TRP 2 is required to be provided to TRP 1, and thus continuous and fast sharing of channel information is needed between TRP 2 and TRP 1 in some cases. The faster the change in channel information over time, the more frequent the sharing of the channel information, and the greater the size of antenna arrays of a UE and a TRP, the larger amount of information required to be transferred to TRP 1 every time channel information is shared.

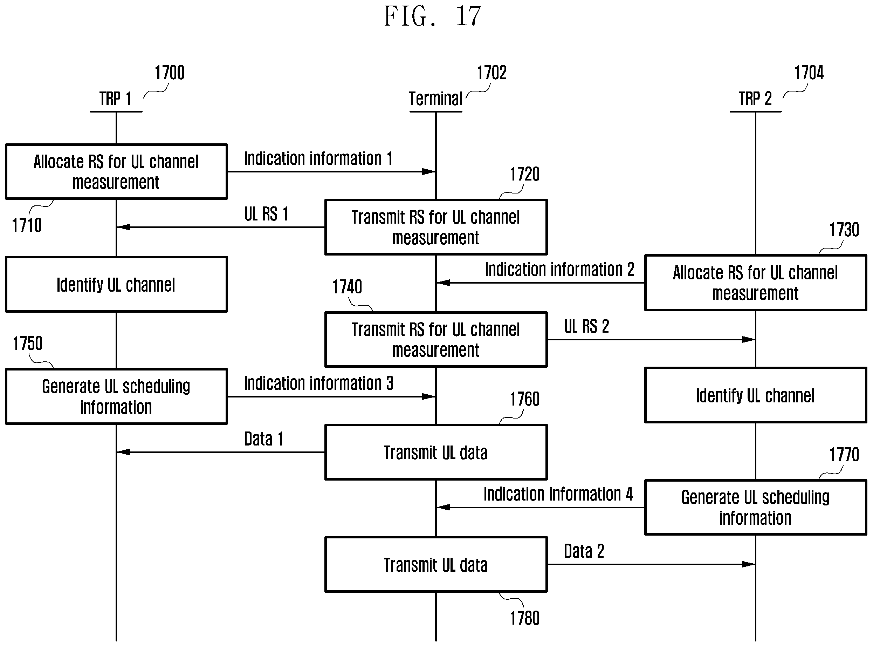

FIG. 17 is a flowchart illustrating an example of UL transmission control and transmission according to an M-DCI technique.

According to FIG. 17, TRP 1 1700 allocates, to a UE 1702, reference signal transmission for measuring a UL channel, and indicates the allocation to the UE through indication information 1 (operation 1710), and the reference signal may be an SRS. The UE transmits allocated UL reference signal 1 to TRP 1 (operation 1720). Thereafter, TRP 2 1704 allocates, to the UE 1702, reference signal transmission for measuring a UL channel, and indicates the allocation to the UE through indication information 2 (operation 1730), and the reference signal may be an SRS. The UE transmits allocated UL reference signal 2 to TRP 2 (operation 1740).

Thereafter, TRP 1 generates UL scheduling information according to a UL channel measured based on UL reference signal 1 and transfers the UL scheduling information to the UE through indication information 3 (operation 1750). The UE having received the UL scheduling information transmits uplink data 1 to TRP 1 (operation 1760). Similarly, TRP 2 generates UL scheduling information according to a UL channel measured based on UL reference signal 2 and transfers the UL scheduling information to the UE through indication information 4 (operation 1770). The UE having received the UL scheduling information transmits uplink data 2 to TRP 2 (operation 1780).

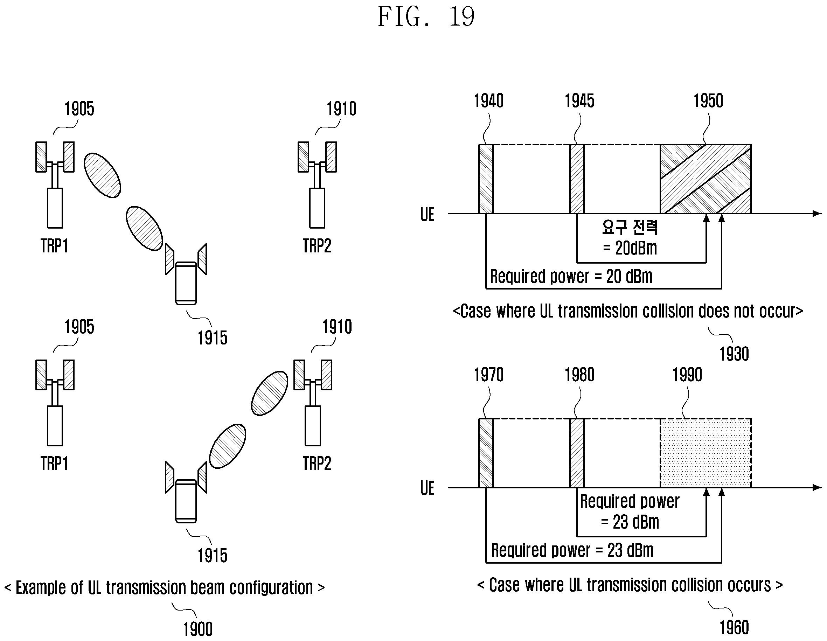

As identifiable through FIG. 17, in the M-DCI technique, a TRP and UE operation is configured in a way similar to a UE communicating with a single TRP. On the contrary, as identifiable through FIG. 16, in the S-DCI technique, a main TRP (TRP 1 in FIG. 19) performs an operation of controlling a UE and another TRP, and a second TRP (TRP 2 or sub-TRP) performs uplink signal or data reception or reference signal measurement according to an indication of the main TRP. That is, in the S-DCI technique, new tasks not performed in single-TRP-based UL communication are required to be performed. All TRPs are generally equipped with a function for performing a single-TRP-based operation. Therefore, the M-DCI technique for supporting m-TRP does not require both a TRP and a UE to be equipped with the new function, compared to the conventional single-TRP technique. On the contrary, it is disadvantageous in that the S-DCI technique requires equipment of the new function.

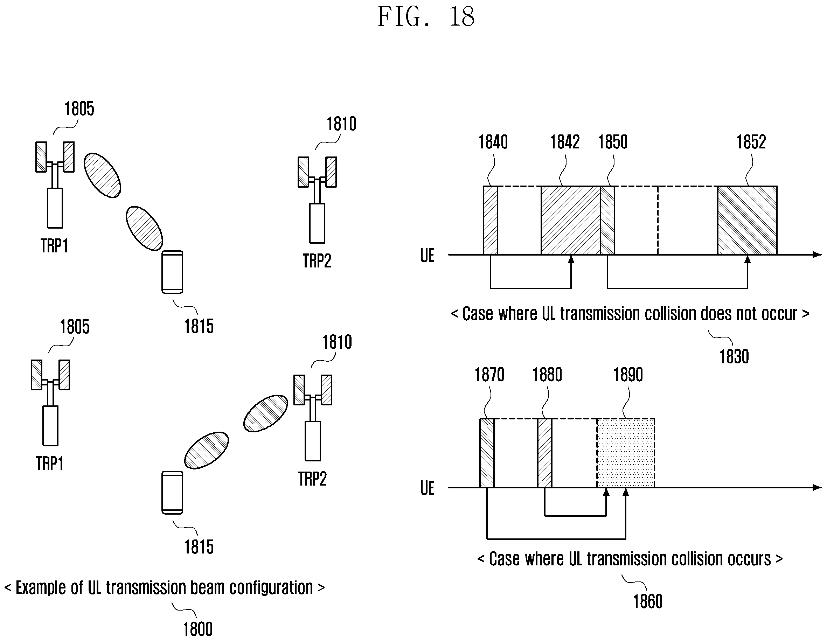

FIG. 18 is a diagram illustrating an example of occurrence of UL transmission collision of a UE in an M-DCI technique. In a case of FIG. 18, it is assumed that two TRPs have different scheduling and different transmission latency (scheduling to transmission latency, a K2 delay, and a time interval in the unit of slots between a time point at which a PDCCH is received and a time point at which a PUSCH scheduled by the received PDCCH is transmitted).

According to FIG. 18, as illustrated in an example 1800, a normal case in which a UE 1815 uses different beams for TRPs 1805 and 1810 at the time of UL communication therewith is assumed. According to a case 1830, a PUSCH 1842 for TRP 1 scheduled by DCI 1840 at TRP 1 1805 and a PUSCH 1852 for TRP 2 scheduled by DCI 1850 at TRP 2 1810 are allocated on different slots. As shown in the case 1830, if UL transmissions indicated by the two TRPs are allocated on different slots, the UE is able to perform the respective UL transmissions 1842 and 1852. However, as shown in a case 1860, if UL transmissions 1890 for the two TRPs scheduled by DCI 1880 at TRP 1 and DCI 1870 at TRP 2 are allocated on the same slot, the UE needs to simultaneously generate two UL beams in order to perform the UL transmissions, and the generation is physically impossible and thus performing the indicated UL transmissions is impossible. In consideration of the above problem, the current 3GPP standard considers only m-TRP UL communication based on the S-DCI technique.

Recently, a UE structure allowing a UE to simultaneously generate multiple beams and an m-TRP operation using the same structure are being discussed as a subject for the 3GPP standard. The discussion may not be subject to M-DCI-based m-TRP UL communication, but the UE structure is expected to enable improvement of the M-DCI-based m-TRP UL communication.

Using multiple panels by a UE supports the UE to simultaneously generate multiple transmission beams, and thus may help removing UL collision as illustrated in FIG. 18. There is a limitation to transmission power usable for UL transmission by a UE, and in a case where simultaneous UL transmission is indicated as illustrated in FIG. 18, if the sum of transmission power consumed to perform the multiple UL transmissions is lower than that usable by the UE, the UE may perform the indicated simultaneous UL transmission. Meanwhile, if the sum of transmission power required for performing the indicated UL transmission is greater than that usable by the UE, the UE is unable to perform the indicated UL transmission and this is defined as a UL transmission collision.

FIG. 19 is a diagram illustrating respective examples of occurrence and non-occurrence of UL transmission collision when simultaneous UL transmission is indicated to a multi-panel UE. In FIG. 19, it is assumed that the maximum transmission power of a UE is 23 dBm.

According to FIG. 19, as illustrated in an example 1900, a normal case in which a UE 1915 uses different beams for TRPs 1905 and 1910 at the time of UL communication therewith is assumed. In a case 1930, a PUSCH 1950 for TRP 2 scheduled by DCI 1940 from TRP 2 1910 and a PUSCH 1950 for TRP 1 scheduled by DCI 1945 from TRP 1 1905 overlap with each other. The total sum of transmission power required for simultaneous UL transmission is 23 dBm, and thus the UE is able to perform simultaneous UL transmission 1950.

On the contrary, in a case 1960, simultaneous transmission power required for simultaneous PUSCH transmission 1990 allocated by DCI 1980 from TRP 1 and DCI 1970 from TRP 2 is 26 dBm, and thus the UE is unable to perform the indicated simultaneous UL transmission. Being unable to perform the indicated simultaneous UL transmission means that the UE performs transmission drop for some or all of the indicated UL transmissions, or performs transmission power reduction (transmission power scale down), that is, the UE does not perform some or all of the indicated UL transmissions, or performs the UL transmissions differently than indicated.

In the above description, PUSCH transmission by DCI is described as an example of UL transmission. However, this description may be applied to all uplink transmissions scheduled by a base station.

The disclosure proposes a method of supporting simultaneous UL transmission of a UE without UL transmission collision by sharing minimum information between TRPs, that is, minimally increasing complexity. An UL transmission control stage proposed in the disclosure includes the following process. The process below may be performed with changed sequences or without some of the process, or is also able to be performed with added other stages. In addition, all the stages are not necessarily continuously performed.

- TRPs to operate in an m-TRP mode may be selected.
- Thereafter, a delay (grant sharing delay, GS delay) consumed for sharing UL transmission control information (UL scheduling information) between the TRPs is calculated, and UL K2 required or supportable by each TRP may be shared between the TRPs.
- In consideration of the GS delay and the K2 values required or supportable by each TRP, a first TRP K2 value applied when a UE performs a UL transmission according to an indication of a first TRP and a second TRP K2 value applied when the UE performs a UL transmission according to an indication of a second TRP may be designated. That is, two different K2 values for respective TRPs may be configured for the UE.

If the UE UL transmission indicated by the first TRP and the UE UL transmission indicated by the second TRP are simultaneously performed, the two K2 values may be indicated so that indication information of the UL transmission indicated by the first TRP is transferred from the first TRP to the second TRP before the second TRP indicates one UL transmission among the UL simultaneous transmissions to the UE (during the simultaneously transmitted UL transmissions).

That is, a sufficiently small second TRP K2 value and a sufficiently large first TRP K2 value may be configured so that, before the second TRP indicates a UL transmission to the UE, the second TRP recognizes in advance that simultaneous transmission occurs, determines whether simultaneous transmission occurs and whether performing the simultaneous transmission is possible, and accordingly indicates the UL transmission to the UE.

A condition for the K2 value is expressible by an equation such as (GS delay + K2 of second TRP)_slot =< (K2 of first TRP)_slot. In the equation, the term ()_slot indicates a minimum number of slots representing a time interval greater than the value in the brackets. For example, if the GS delay is 1.2 slots and the K2 value of the first TRP is 1 slot, (GS delay + K2 of second TRP)_slot is 3.

**[0207]** - The determined K2 values may be shared between the TRPs. At least the K2 value of the first TRP is transferred to the second TRP, the second TRP may determine a second TRP K2 value by considering the K2 value determined by the first TRP, and the determined K2 values may be used for UE UL transmission control.

Through the method, the first TRP transfers the control information to the second TRP as well as the UE at the time of UL transmission control, and the second TRP may indicate the UE to perform another UL transmission without UL transmission collision. More specifically, the second TRP classifies slots on which the UE is able to perform UL transmission, as the following three types of slots, based on the information.

- Single transmission slot: A slot on which the first TRP does not allocate UL transmission to the UE and thus is able to indicate a UL transmission for TRP 2 of the UE without simultaneous UL transmission
- Simultaneous transmission slot: A slot on which the first TRP has allocated a UL transmission to the UE but the transmission power required by UE transmission for the first TRP is smaller than the available transmission power of the UE and thus TRP 2 is able to allocate simultaneous UL transmission to the UE
- Non-transmittable slot: A slot on which the first TRP has allocated a UL transmission requiring high power to the UE and thus the second TRP is unable to allocate UL transmission

The second TRP indicates a UL transmission for TRP 2 to the UE according to the slot types. Accordingly, UL transmission collision may be prevented.

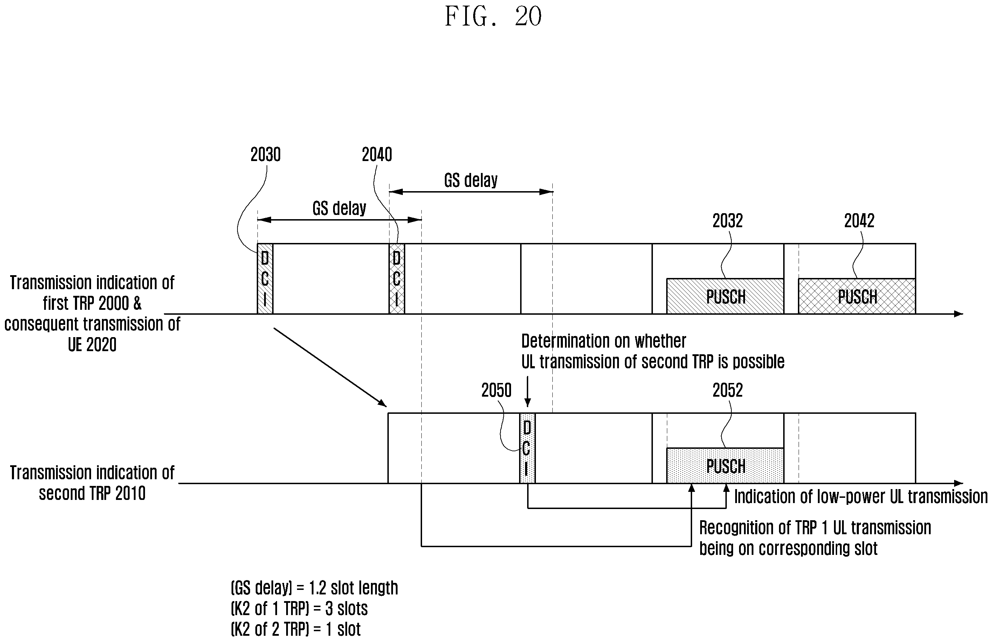

FIG. 20 is a diagram illustrating an example in which it is possible for a second TRP to distinguish a simultaneous transmission slot according to configuration of a K2 value. According to FIG. 20, UL transmission collision being avoidable when (GS delay + K2 of second TRP)_slot = (K2 of first TRP)_slot is configured is illustrated.

According to FIG. 20, in a situation where a second TRP 2010 is to indicate a UL transmission to a UE, some of information on UL transmission indicated by a first TRP 2000 to the UE 2020 may be shared with the second TRP 2010 and some of the information may not be transferred to the second TRP due to a GS delay. At a time point at which the second TRP 2010 is to indicate a UL transmission 2052 to the UE through third DCI 2050, information on a UL transmission 2032 indicated by first DCI 2030 is shared with the second TRP 2010, but information on a UL transmission of the UE indicated by second DCI 2040 is not shared with the second TRP due to a GS delay. However, a slot on which the UL transmission 2052 is allocated through the third DCI 2050 is different from a slot on which the UL transmission 2042 is allocated by the second DCI 2040, and thus the second DCI 2040 being shared late is not problematic when the second TRP 2010 indicates a UL transmission to the UE.

UL transmission information of the UE according to the first DCI 2030 is shared with the second TRP before the second TRP 2010 indicates a UL transmission to the UE through the third DCI 2050. Therefore, when the second TRP 2010 allocates a UL transmission to the UE through the third DCI 2050, the second TRP may recognize that simultaneous UL transmission of the UE may occur. In this case, if there is enough available power for the UE because the UE does not use high transmission power for the UL transmission for the first TRP 2000, the second TRP 2010 indicates a UL transmission requiring low power to the UE so that the UE performs simultaneous UL transmission. Alternatively, if the UE is required to use high transmission power for the UL transmission for the first TRP 2000, the second TRP 2010 does not perform indication of UL transmission to the UE through the third DCI 2050 so as to avoid UL transmission collision of the UE.

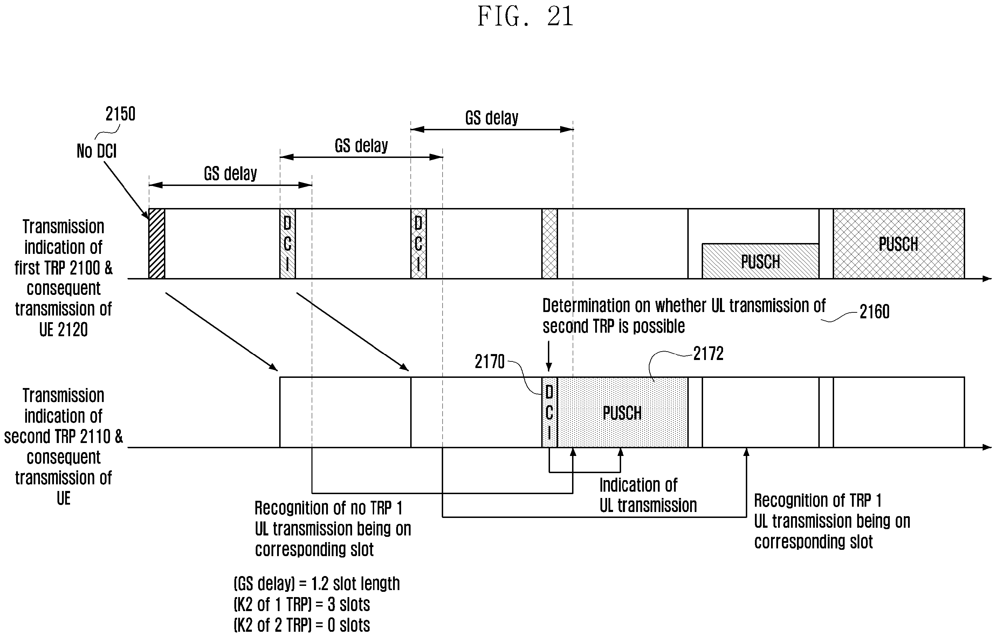

FIG. 21 is a diagram illustrating another example in which it is possible for a second TRP to distinguish a single transmission slot according to configuration of a K2 value. According to FIG. 21, UL transmission collision being avoidable when (GS delay + K2 of second TRP)_slot < (K2 of first TRP)_slot is configured is illustrated.

A case where a second TRP 2110 indicates a UL transmission 2172 to a UE through third DCI 2170 is assumed. The second TRP 2110 is aware that the UL transmission of the UE by the third DCI 2170 of the second TRP 2110 is to occur on the same slot as a UL transmission of the UE indicatable by a first TRP 2100 through an area 2150, and in addition, when the first TRP 2100 indicates a UL transmission to the UE through DCI in the area 2150, the information on the indication may be shared with the second TRP before transmission of the third DCI 2170.

In the example of FIG. 21, the first TRP 2100 does not indicate UL transmission to the UE through the area 2150. The second TRP 2110 identifies that there is no UL transmission indication to the UE in the area 2150 from the first TRP 2100, and thus may recognize that, if the second TRP 2110 indicates a UL transmission to the UE through the third DCI 2170, only UL transmission by the indication of the second TRP 2170 is performed without simultaneous UL transmission. The second TRP 2170 may schedule a UL transmission through the third DCI 2170, based on the understanding (2160).

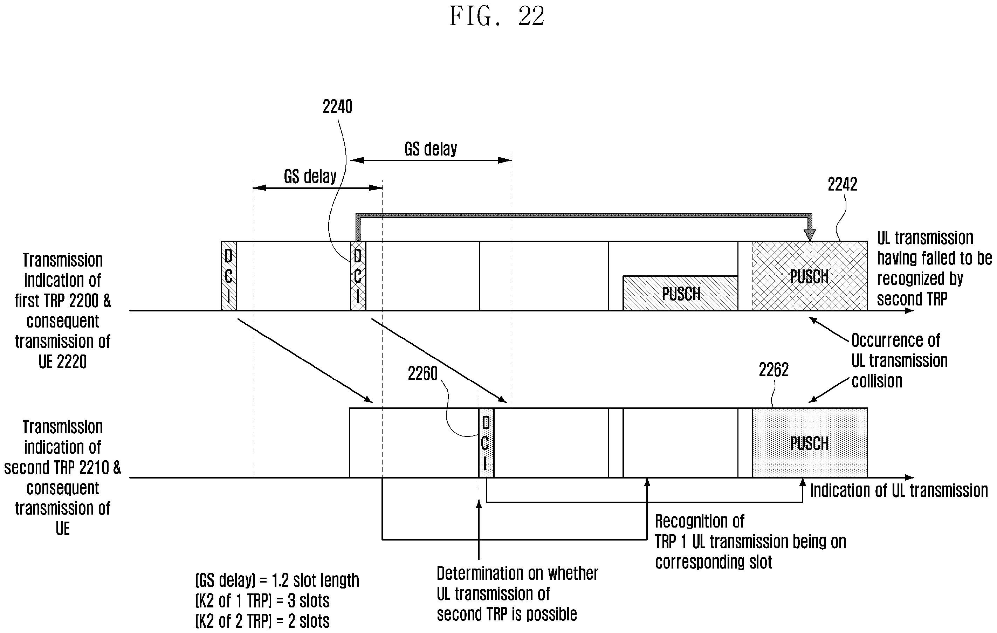

FIG. 22 is a diagram illustrating an example in which UL transmission collision of a UE occurs according to configuration of a K2 value not following a method proposed in the disclosure. According to FIG. 22, a UL transmission 2242 of a UE indicated by a first TRP 2200 through second DCI 2240 and a UL transmission 2262 of the UE indicated by a second TRP 2210 through third DCI 2260 occurs on the same slot. However, at a time point at which the second TRP 2210 transmits the third DCI 2260, the second DCI 2240 of the first TRP 2200 is not shared with the second TRP 2210 due to a GS delay. That is, the second TRP 2210 is unable to know whether the UL transmission 2242 of the UE by the second DCI 2240 is performed, and thus if the second TRP 2240 indicates the UL transmission 2262 to the UE through the third DCI 2260, a UL transmission collision may occur.

As in the examples shown in FIG. 20 and FIG. 21, in a case where TRPs and two different K2 values are allocated to a UE, and the K2 values are determined to satisfy the equation (GS delay + K2 of second TRP)_slot <= (K2 of first TRP)_slot by considering a delay in sharing information between the TRPs, UL transmission collision caused by independent UL transmission control by the first TRP and the second TRP may be prevented. In comparison with the conventional techniques for preventing UL transmission collision, or multi-TRP cooperative communication techniques being applicable only when information sharing between TRPs without delay is possible, a technique proposed in the disclosure is advantages in that the technique is applicable even when a large delay equal to or greater than a slot length occurs in information sharing between TRPs.

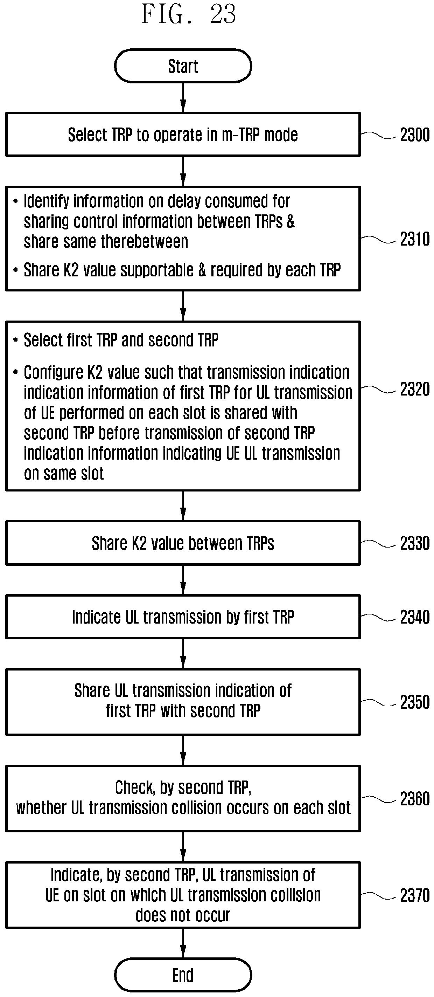

FIG. 23 is a diagram illustrating an example of an operation of a TRP for performing the disclosure.

According to FIG. 23, multiple TRPs capable of operation in an m-TRP mode may be selected (operation 2300). Each TRP is included in a TRP set capable of operation in the m-TRP mode according to a network structure, and may perform a m-TRP operation described for the TRP. In a TRP set configured by three or more TRPs, a main TRP performing PDCCH transmission (or performing scheduling) or a controller controlling the main TRP (e.g., a centralized unit (CU) responsible for a function of controlling a base station when the base station is functionally separated) may select TRPs to operate in the m-TRP mode together with the main TRP. Alternatively, in a TRP set configured by three or more TRPs, a central controller controlling operations of multiple TRPs may select TRPs to operate in the m-TRP mode from among the multiple TRPs. Alternatively, TRPs belonging to a TRP set configured by three or more TRPs may select a TRP to operate in the m-TRP mode according to a request of a UE. For example, the UE may request a particular TRP to operate in the m-TRP mode in a PRACH transmission and random access process, and a TRP to operate in the m-TRP mode may be selected based on the request.

Each TRP identifies information on a delay time consumed for sharing control information and a K2 value supportable or required by the TRP, and shares the information and the value with other TRPs (operation 2310). The K2 value is for each TRP, and may be a set of one or more K2 values. Thereafter, a first TRP and a second TRP capable of performing simultaneous UL transmission are selected from among the multiple TRPs, and the K2 value of each TRP is configured such that transmission indication information of the first TRP for UL transmission of the UE performed on a particular slot according to the described contents is shared with the second TRP before transmission of transmission indication information of the second TRP for UL transmission of the UE performed on the same slot (operation 2320). The configured K2 value may be a value selected from a set of K2 values corresponding to each TRP.

Thereafter, each TRP shares the configured K2 value with the other TRP (operation 2330), and the first TRP indicates a UL transmission of the UE (operation 2340) and shares transmission indication information with the second TRP (operation 2350). The transmission indication information may be, for example, information included in higher layer signaling and/or DCI for scheduling the UL transmission by the first TRP and, for example, if the UL transmission is PUSCH transmission of the UE, the information may be time domain and/or frequency domain resource allocation information, transmission power-related information of the PUSCH, etc. The second TRP having received the transmission indication information identifies whether a UL transmission collision occurs on a slot on which UL transmission of the UE is possible, based on the transmission indication information (operation 2360). The second TRP transmits, to the UE, information indicating a UL transmission of the UE on a slot on which UL transmission collision does not occur (operation 2370). The second TRP may not schedule UL transmission on a slot on which the UL transmission of the first TRP is indicated, or may schedule UL transmission on the same slot by considering the transmission power of the UL transmission of the first TRP.

The process above may be performed with changed sequences or without some of the process, or is also able to be performed with added other stages. In addition, all the stages are not necessarily continuously performed.

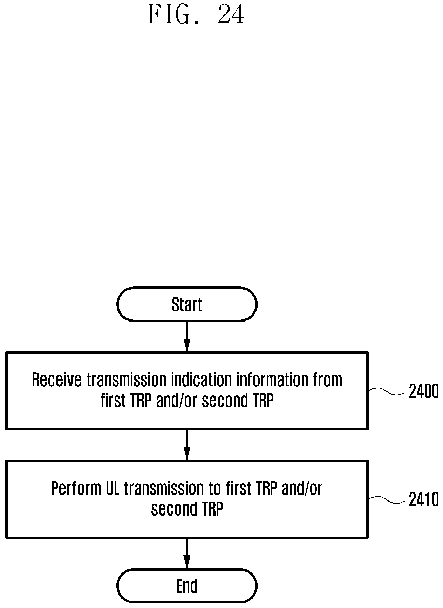

FIG. 24 is a diagram illustrating an operation of a UE for performing the disclosure.

According to FIG. 24, a UE receives transmission indication information indicating a UL transmission from a first TRP and/or a second TRP. The UE having received the transmission indication information performs the UL transmission to the first TRP and/or the second TRP according to the transmission indication information. Resources for the UL transmission to the first TRP and/or the second TRP may not overlap or overlap with each other on the time axis, and in this case, the sum of transmission power may be smaller than predetermined transmission power, such as maximum transmission power or required simultaneous transmission power of the UE.

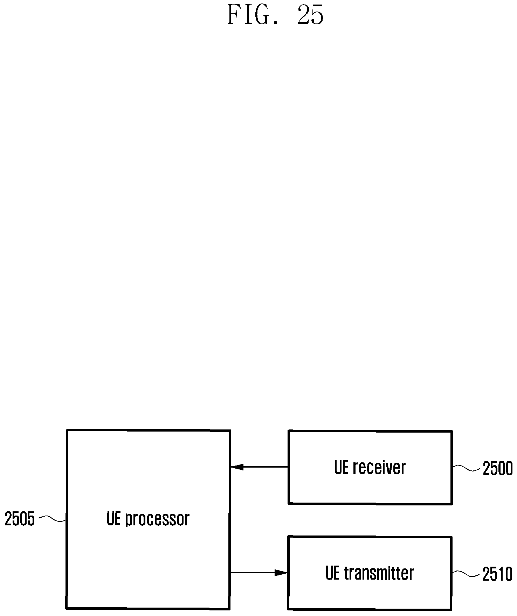

FIG. 25 illustrates a structure of a UE according to an embodiment of the disclosure.

Referring to FIG. 25, the UE may include a transceiver, which refers to a UE receiver 2500 and a UE transmitter 2510 as a whole, a memory (not illustrated), and a UE processor 2505 (or UE controller or processor). The UE transceiver 2500 and 2510, the memory, and the UE processor 2505 may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the UE may include multiple memories.

In addition, the processor may control a series of processes such that the UE can operate according to the above-described embodiments. For example, the processor may control components of the UE to receive DCI configured in two layers so as to simultaneously receive multiple PDSCHs. The UE may include multiple processors, and the processors may perform the UE's component control operations by executing programs stored in the memory.

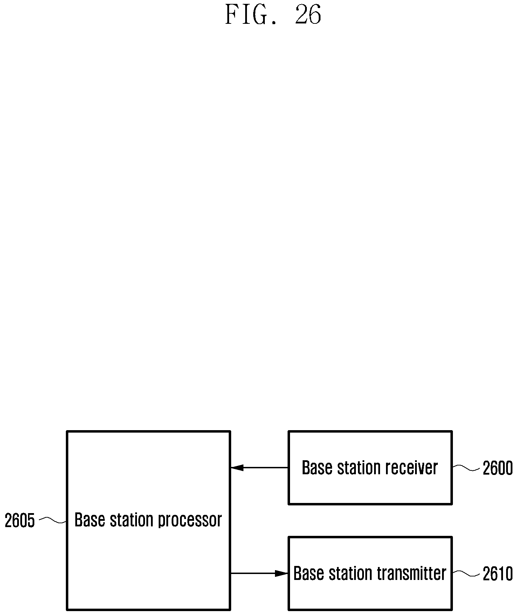

FIG. 26 illustrates a structure of a base station according to an embodiment of the disclosure.

Referring to FIG. 26, the base station may include a transceiver, which refers to a base station receiver 2600 and a base station transmitter 2610 as a whole, a memory (not illustrated), and a base station processor 2605 (or base station controller or processor). The base station transceiver 2600 and 2610, the memory, and the base station processor 2605 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to up-convert and amplify the frequency of transmitted signals, an RF receiver configured to low-noise-amplify received signals and down-convert the frequency thereof, and the like. This is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the base station may include multiple memories.

The processor may control a series of processes such that the base station can operate according to the above-described embodiments of the disclosure. For example, the processor may control components of the base station to configure DCI configured in two layers including allocation information regarding multiple PDSCHs and to transmit the same. The base station may include multiple processors, and the processors may perform the base station's component control operations by executing programs stored in the memory

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a UE. As an example, a part of a first embodiment of the disclosure may be combined with a part of a second embodiment to operate a base station and a UE. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a first transmission node of a communication system, the method comprising:

   obtaining a second scheduling offset value for a second uplink transmission of a second transmission node;
   obtaining information on the second uplink transmission of the second transmission node;
   determining whether the second uplink transmission of the second transmission node is to collide with a first uplink transmission to be performed by the first transmission node, based on the scheduling offset and the information on the second uplink transmission;
   in case that the second uplink transmission does not collide with the first uplink transmission, transmitting information scheduling the first uplink transmission to a terminal; and
   receiving the first uplink transmission from the terminal after a first scheduling offset.

2. The method of claim 1, wherein the second scheduling offset is greater than a sum of the first scheduling offset and a grant sharing (GS) delay between the second transmission node and the first transmission node.

3. The method of claim 1, wherein, in case that the first uplink transmission collides with the second uplink transmission, scheduling of the second uplink transmission is omitted.

4. The method of claim 1, wherein information on the first uplink transmission comprises information on a resource and/or transmission power of the first uplink transmission.

5. The method of claim 5, wherein each of the first and second uplink transmissions corresponds to an uplink data transmission on a physical uplink shared channel (PUSCH).

6. A method performed by a terminal of a communication system, the method comprising:

   receiving information scheduling a second uplink transmission from a second transmission node, the second uplink transmission being performed after a second scheduling offset after reception of the information scheduling the second uplink transmission;

receiving information scheduling a first uplink transmission from a first transmission node, the first uplink transmission being performed after a first scheduling offset after reception of the information scheduling the first uplink transmission; and

performing the first uplink transmission and the second uplink transmission,

wherein the second scheduling offset is greater than a sum of the first scheduling offset and a grant sharing (GS) delay between the second transmission node and the first transmission node.

7. The method of claim 6, wherein each of the first and second uplink transmissions corresponds to an uplink data transmission on a physical uplink shared channel (PUSCH).

8. A first transmission node of a communication system, the first transmission node comprising:

a transceiver; and

a controller configured to perform control to obtain a second scheduling offset value for a second uplink transmission of a second transmission node, obtain information on the second uplink transmission of the second transmission node, determine whether the second uplink transmission of the second transmission node is to collide with a first uplink transmission to be performed by the first transmission node, based on the scheduling offset and the information on the second uplink transmission, in case that the second uplink transmission does not collide with the first uplink transmission, transmit information scheduling the first uplink transmission to a terminal, and receive the first uplink transmission from the terminal after a first scheduling offset.

9. The first transmission node of claim 8, wherein the second scheduling offset is greater than a sum of the first scheduling offset and a grant sharing (GS) delay between the second transmission node and the first transmission node.

10. The first transmission node of claim 8, wherein, in case that the first uplink transmission collides with the second uplink transmission, scheduling of the second uplink transmission is omitted.

11. The first transmission node of claim 8, wherein information on the first uplink transmission comprises information on a resource and/or transmission power of the first uplink transmission.

12. The first transmission node of claim 8, wherein each of the first and second uplink transmissions corresponds to an uplink data transmission on a physical uplink shared channel (PUSCH).

13. A terminal of a communication system, the terminal comprising:

a transceiver; and

a controller configured to perform control to receive information scheduling a second uplink transmission from a second transmission node, the second uplink transmission being performed after a second scheduling offset after reception of the information scheduling the second uplink transmission, receive information scheduling a first uplink transmission from a first transmission node, the first uplink transmission being performed after a first scheduling offset after reception of the information scheduling the first uplink transmission, and perform the first uplink transmission and the second uplink transmission,

wherein the second scheduling offset is greater than a sum of the first scheduling offset and a grant sharing (GS) delay between the second transmission node and the first transmission node.

14. The terminal of claim 13, wherein each of the first and second uplink transmissions corresponds to an uplink data transmission on a physical uplink shared channel (PUSCH).

# FIG. 1

1 Subframe (110)

$N_{symb}^{subframe,\mu}$ OFDM symbol

1 OFDM symbol (102)

1 Subcarrier (103)

$K=N_{RB,x}^{max,\mu}N_{sc}^{RB}-1$

Resource block
$N_{sc}^{RB}$
Subcarrier
(104)

$N_{RB}^{\mu}N_{sc}^{RB}$
Subcarrier

Resourceelement
(101)

Frequency

Time

$\bar{l}=0$

$\bar{l}=14\cdot 2^{\mu}-1$

$K=0$

FIG. 2

1 Frame (200)

1 Subframe (201)

μ=0 (204): | 0 | 1 | 2 | 3 | 4 | 5 | 6 | 7 | 8 | 9 |

Slot (202)

μ=1 (205): | 0 | 1 | 2 | 3 | 4 | 5 | 6 | 7 | 8 | 9 | 10 | 11 | 12 | 13 | 14 | 15 | 16 | 17 | 18 | 19 |

Slot (203)

EP 4 465 545 A1

# FIG. 3

Duration
(304)

Frequency
resource
(303)

UE bandwidth
part
(310)

Slot (320)

Frequency

Time

CORESET#1 (301)

CORESET#2 (302)

FIG. 4

1 symbol
(401)

1 PRB
(402)

DMRS
(405)

REG
(403)

CCE
(404)

# FIG. 5

TCI state #0
(500)

TCI state #1
(505)

TCI state #2
(510)

# FIG. 6

RRC-configured TCI sates (600)

| TCI #0 (605) | TCI #1 (610) | TCI #2 (615) | . . . | TCI #N (620) |

List of TCI sates for CORESET (625)

| TCI #a (630) | TCI #b (635) | . . . | TCI #n (640) |

TCI indication through MAC CE (645)

# FIG. 7

| Serving cell ID (715) | CORESET ID (720) | Oct 1 (700) |
|---|---|---|
| CORE SET ID | TCI state ID (725) | Oct 2 (705) |

FIG. 8

FIG. 9

915

Type 0
(900)

| Bitmap |
| --- |

920                                        925

Type 1
(905)

| Starting VRB | Length |
| --- | --- |

930                                        935

Type 0 & 1
(910)

| 1 bit for indication of type | Max {type 0 payload, type 1 payload} |
| --- | --- |

EP 4 465 545 A1

# FIG. 10

S
(1000)

L (1005)

| 0 | 1 | 2 | 3 | 4 | 5 | 6 | 7 | 8 | 9 | 10 | 11 | 12 | 13 |

OFDM symbol

$$\text{Slot } \left\lfloor n \cdot \frac{2^{\mu_{PDSCH}}}{2^{\mu_{PDCCH}}} \right\rfloor + K_0 \ (1010)$$

# FIG. 11

$\mu_{PDCCH} = 1$

PDCCH

[1100]

slot n (1105)   slot n + 1   · · ·   t

$\mu_{PDSCH} = 1$

PDSCH

t

· · ·   slot n + $K_0$   (1110)

$\mu_{PDCCH} = 1$

PDCCH

[1105]

slot n (1105)   slot n + 1   · · ·   t

$\mu_{PDSCH} = 2$

PDSCH

t

slot $\left\lfloor n \cdot \dfrac{2^{\mu_{PDSCH}}}{2^{\mu_{PDCCH}}} \right\rfloor$   · · ·   slot $\left\lfloor n \cdot \dfrac{2^{\mu_{PDSCH}}}{2^{\mu_{PDCCH}}} \right\rfloor + K_0$   (1155)

EP 4 465 545 A1

FIG. 12A

RRC-configured TCI sates

1200

| TCI #0 | TCI #1 | TCI #2 | TCI #3 | · · · | TCI #M-1 |

TCI states for PDSCH activated through MAC CE

1220

| TCI #0' | TCI #1' | TCI #2' | · · · | TCI #K-1 |

MAC CE-based beam indication

TCI state for PDSCH

1240

| TCI #l | DCI-based beam selection

## FIG. 12B

MAC CE structure 1260

| CORESET Pool ID | Serving cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

1255   1250   1265   1270

# FIG. 13

EP 4 465 545 A1

## FIG. 14

| | |
|---|---|
| TRP #0 control information | DCI #0 |
| TRP #1 control information | DCI #1 |
| ⋮ | ⋮ |
| TRP #(N-1) control information | DCI #(N-1) |

Case #1 (1400)

| | |
|---|---|
| TRP #0 control information | DCI #0 |
| TRP #1 control information | sDCI #0 |
| ⋮ | ⋮ |
| TRP #(N-1) control information | sDCI #(N-2) |

Case #2 (1405)

| | |
|---|---|
| TRP #0 control information | DCI |
| TRP #1 control information | sDCI |
| ⋮ | |
| TRP #(N-1) control information | |

Case #3 (1410)

| | |
|---|---|
| TRP #0 control information | |
| TRP #1 control information | Long DCI |
| ⋮ | ⋮ |
| TRP #(N-1) control information | |

Case #4 (1415)

FIG. 15

1500

| R | Serving cell ID | BWP ID | Oct 1 |
|---|---|---|---|
| C₀ (1505) | TCI state ID_{0,1} | | Oct 2 |
| R (1510) | TCI state ID_{0,2} | | Oct 3 (Optional) |

1515

...

| C_N | TCI state ID_{N,1} | Oct M-1 |
| R | TCI state ID_{N,2} | Oct M (Optional) |

58

# FIG. 16

1600
TRP 1

1602
TRP 2

1604
Terminal

Indication information 1

| Allocate RS for UL channel measurement |
| --- |

Indication information 2

1610

| Prepare for UL channel measurement |
| --- |

1620

1630

UL RS 1

| Transmit RS for UL channel measurement |
| --- |

| Identify UL channel |
| --- |

UL RS 2

1635

1640

UL channel information

| Identify UL channel |
| --- |

| Collect UL channel information |
| --- |

Indication information 3

| Generate UL scheduling information |
| --- |

Indication information 4

1650

| Prepare for UL data reception |
| --- |

1660

Data 1

| Transmit UL data |
| --- |

Data 2

EP 4 465 545 A1

FIG. 17

1700

TRP 1

1702

Terminal

1704

TRP 2

| Allocate RS for UL channel measurement | Indication information 1 | → | |

1710

1720

| | UL RS 1 | Transmit RS for UL channel measurement | |

1730

| Identify UL channel | Indication information 2 | | Allocate RS for UL channel measurement |

1740

1750

| | Transmit RS for UL channel measurement | UL RS 2 | → |

| Generate UL scheduling information | Indication information 3 | → | Identify UL channel |

1760

| ← | Data 1 | Transmit UL data | |

1770

| | Indication information 4 | ← | Generate UL scheduling information |

| | Transmit UL data | Data 2 | → |

1780

EP 4 465 545 A1

# FIG. 18

< Example of UL transmission beam configuration >

1800

< Case where UL transmission collision does not occur >

1830

< Case where UL transmission collision occurs >

1860

EP 4 465 545 A1

# FIG. 19

< Example of UL transmission beam configuration >

1900

<Case where UL transmission collision does not occur>

1930

<Case where UL transmission collision occurs >

1960

EP 4 465 545 A1

# FIG. 20

2030    2040

GS delay

GS delay

2032    2042

Transmission indication of
first TRP 2000 &
consequent transmission of
UE 2020

DCI    DCI    PUSCH    PUSCH

Determination on whether
UL transmission of second TRP is possible

2050    2052

Transmission indication of
second TRP 2010

DCI    PUSCH

Indication of low-power UL transmission

Recognition of TRP 1 UL transmission
being on corresponding slot

(GS delay) = 1.2 slot length
(K2 of 1 TRP) = 3 slots
(K2 of 2 TRP) = 1 slot

# FIG. 21

2150

No DCI

GS delay

GS delay

GS delay

Transmission indication of first TRP 2100 & consequent transmission of UE 2120

DCI

DCI

PUSCH

PUSCH

Determination on whether UL transmission of second TRP is possible — 2160

2170

2172

Transmission indication of second TRP 2110 & consequent transmission of UE

DCI

PUSCH

Indication of UL transmission

Recognition of no TRP 1 UL transmission being on corresponding slot

Recognition of TRP 1 UL transmission being on corresponding slot

(GS delay) = 1.2 slot length
(K2 of 1 TRP) = 3 slots
(K2 of 2 TRP) = 0 slots

# FIG. 22

Transmission indication of first TRP 2200 & consequent transmission of UE 2220

Transmission indication of second TRP 2210 & consequent transmission of UE

(GS delay) = 1.2 slot length
(K2 of 1 TRP) = 3 slots
(K2 of 2 TRP) = 2 slots

GS delay

GS delay

2240

2242

UL transmission having failed to be recognized by second TRP

PUSCH

Occurrence of UL transmission collision

2260

2262

PUSCH

Indication of UL transmission

Determination on whether UL transmission of second TRP is possible

Recognition of TRP 1 UL transmission being on corresponding slot

EP 4 465 545 A1

# FIG. 23

```
                    ┌──────────┐
                    │  Start   │
                    └──────────┘
                          │
                          ▼
┌─────────────────────────────────────────┐
│   Select TRP to operate in m-TRP mode    │──── 2300
└─────────────────────────────────────────┘
                          │
                          ▼
┌─────────────────────────────────────────┐
│ • Identify information on delay consumed │
│   for sharing control information        │
│   between TRPs & share same therebetween │──── 2310
│ • Share K2 value supportable & required  │
│   by each TRP                            │
└─────────────────────────────────────────┘
                          │
                          ▼
┌─────────────────────────────────────────┐
│ • Select first TRP and second TRP        │
│ • Configure K2 value such that           │
│   transmission indication indication     │
│   information of first TRP for UL        │
│   transmission of UE performed on each   │──── 2320
│   slot is shared with second TRP before  │
│   transmission of second TRP indication  │
│   information indicating UE UL           │
│   transmission on same slot              │
└─────────────────────────────────────────┘
                          │
                          ▼
┌─────────────────────────────────────────┐
│        Share K2 value between TRPs        │──── 2330
└─────────────────────────────────────────┘
                          │
                          ▼
┌─────────────────────────────────────────┐
│       Indicate UL transmission by first TRP │──── 2340
└─────────────────────────────────────────┘
                          │
                          ▼
┌─────────────────────────────────────────┐
│       Share UL transmission indication of │
│          first TRP with second TRP        │──── 2350
└─────────────────────────────────────────┘
                          │
                          ▼
┌─────────────────────────────────────────┐
│           Check, by second TRP,           │
│  whether UL transmission collision occurs │──── 2360
│              on each slot                 │
└─────────────────────────────────────────┘
                          │
                          ▼
┌─────────────────────────────────────────┐
│    Indicate, by second TRP, UL transmission│
│   of UE on slot on which UL transmission  │──── 2370
│        collision does not occur           │
└─────────────────────────────────────────┘
                          │
                          ▼
                    ┌──────────┐
                    │   End    │
                    └──────────┘
```

FIG. 24

```
        ╭──────────╮
        │  Start   │
        ╰──────────╯
             │
             ▼
┌──────────────────────────────────────┐
│ Receive transmission indication       │
│ information from first TRP and/or     │──── 2400
│ second TRP                            │
└──────────────────────────────────────┘
             │
             ▼
┌──────────────────────────────────────┐
│ Perform UL transmission to first TRP  │
│ and/or second TRP                     │──── 2410
└──────────────────────────────────────┘
             │
             ▼
        ╭──────────╮
        │   End    │
        ╰──────────╯
```

# FIG. 25

UE processor — 2505

UE receiver ~2500

UE transmitter ~2510

FIG. 26

2605 ~ Base station processor

Base station receiver ~ 2600

Base station transmitter ~ 2610

## INTERNATIONAL SEARCH REPORT

| International application No. |
| --- |
| **PCT/KR2023/002051** |

**A. CLASSIFICATION OF SUBJECT MATTER**

**H04B 7/0404**(2017.01)i; **H04B 7/0408**(2017.01)i; **H04B 7/024**(2017.01)i; **H04B 7/06**(2006.01)i; **H04W 72/04**(2009.01)i; **H04W 72/23**(2023.01)i; **H04W 52/14**(2009.01)i; **H04W 52/42**(2009.01)i

According to International Patent Classification (IPC) or to both national classification and IPC

**B. FIELDS SEARCHED**

Minimum documentation searched (classification system followed by classification symbols)

H04B 7/0404(2017.01); H04L 12/26(2006.01); H04L 5/00(2006.01); H04W 72/04(2009.01); H04W 72/12(2009.01); H04W 74/00(2009.01); H04W 74/08(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크 전송(uplink transmission), 스케줄링 오프셋(scheduling offset), 스케줄링 정보(scheduling information), 충돌(collision), GS 지연(grant sharing delay)

**C. DOCUMENTS CONSIDERED TO BE RELEVANT**

| Category* | Citation of document, with indication, where appropriate, of the relevant passages | Relevant to claim No. |
| --- | --- | --- |
| Y | US 2018-0249493 A1 (TELEFONAKTIEBOLAGET LM ERICSSON (PUBL)) 30 August 2018 (2018-08-30)<br>See paragraphs [0040]-[0042], [0050] and [0052]-[0054]; and figures 3-5. | 1-14 |
| Y | WO 2022-029696 A1 (TELEFONAKTIEBOLAGET LM ERICSSON (PUBL)) 10 February 2022 (2022-02-10)<br>See paragraphs [0026] and [0101]-[0102]; and figure 4. | 1-14 |
| A | US 2020-0288488 A1 (QUALCOMM INCORPORATED) 10 September 2020 (2020-09-10)<br>See paragraphs [0129]-[0150]; and figures 3-6. | 1-14 |
| A | WO 2022-016349 A1 (ZTE CORPORATION) 27 January 2022 (2022-01-27)<br>See pages 22-32; and figures 8-12. | 1-14 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 May 2023** | **17 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/002051** |

**C.    DOCUMENTS CONSIDERED TO BE RELEVANT**

| Category* | Citation of document, with indication, where appropriate, of the relevant passages | Relevant to claim No. |
|---|---|---|
| A | US 2021-0307070 A1 (ELECTRONICS AND TELECOMMUNICATIONS RESEARCH INSTITUTE) 30 September 2021 (2021-09-30)<br>    See paragraphs [0672]-[0799]; and figures 57-66. | 1-14 |

Form PCT/ISA/210 (second sheet) (July 2022)

**INTERNATIONAL SEARCH REPORT**
Information on patent family members

International application No.

**PCT/KR2023/002051**

| Patent document cited in search report | | | Publication date (day/month/year) | Patent family member(s) | | | Publication date (day/month/year) |
|---|---|---|---|---|---|---|---|
| US | 2018-0249493 | A1 | 30 August 2018 | EP | 3345347 | A1 | 11 July 2018 |
| | | | | EP | 3345347 | B1 | 25 August 2021 |
| | | | | US | 10470206 | B2 | 05 November 2019 |
| | | | | WO | 2017-039512 | A1 | 09 March 2017 |
| WO | 2022-029696 | A1 | 10 February 2022 | None | | | |
| US | 2020-0288488 | A1 | 10 September 2020 | CN | 113519198 | A | 19 October 2021 |
| | | | | EP | 3935905 | A1 | 12 January 2022 |
| | | | | US | 11240831 | B2 | 01 February 2022 |
| | | | | WO | 2020-180465 | A1 | 10 September 2020 |
| WO | 2022-016349 | A1 | 27 January 2022 | EP | 4066565 | A1 | 05 October 2022 |
| | | | | EP | 4066565 | A4 | 30 November 2022 |
| | | | | KR | 10-2022-0113424 | A | 12 August 2022 |
| | | | | US | 2022-0330321 | A1 | 13 October 2022 |
| US | 2021-0307070 | A1 | 30 September 2021 | KR | 10-2021-0120873 | A | 07 October 2021 |
| | | | | US | 2023-0078723 | A1 | 16 March 2023 |

Form PCT/ISA/210 (patent family annex) (July 2022)